# EUROPEAN PATENT APPLICATION

(11) **EP 1 085 136 A1**
(43) Date of publication of application: **21.03.2001**
(21) Application number: 99919621.5
(22) Date of filing: 17.05.1999
(51) Int. Cl.: E04B 1/62, B32B 27/20

(54) **INTERIOR AND EXTERIOR CONSTRUCTION MATERIAL WITH SATISFACTORY RESISTANCE TO FOULING**

(30) Priority: 25.05.1998 JP 14319198
(71) Applicant: Daikin Industries, Ltd., Osaka-shi Osaka 530-8323 (JP)
(72) Inventor: CHIDA, Akira, Yodogawa-seisakusho, Settsu-shi, Osaka 566-8585 (JP); WADA, Susumu, Yodogawa-seisakusho, Settsu-shi, Osaka 566-8585 (JP); MOHRI, Haruhiko, Yodogawa-seisakusho, Settsu-shi, Osaka 566-8585 (JP); YONEI, Yasushi, Yokogawa-seisakusho, Settsu-shi, Osaka 566-8585 (JP); HONDA, Kayoko, Yodogawa-seisakusho, Settsu-shi, Osaka 566-8585 (JP)
(74) Representative: HOFFMANN - EITLE
(86) International application number: JP9902556
(87) International publication number: WO9961717

(57) **Abstract**

To provide construction materials for interior and exterior building materials which are produced by applying a resin composition comprising a thermoplastic resin and hydrophilic compound to a substrate, have good stain-proofing property and are excellent in adhesion, weather resistance, stain removing property, and the like.

## Description

### TECHNICAL FIELD

The present invention relates to interior and exterior construction materials having good stain-proofing property and produced by coating a thermoplastic resin composition containing a hydrophilic compound.

### BACKGROUND ART

Hitherto construction materials in the form of film and plate, for example, tent house, storeroom, sheet hung on the eaves, plastic screen, blind, water-proof sheet for roof, protection mesh sheet, wall paper, flooring material, and the like have been used for interior and exterior use.

Such construction materials are demanded not only to have physical durability but also to maintain appearance thereof for a long period of time. The following methods for surface-treating and coating of the construction materials with a fluorine-containing-resin excellent in weather resistance and stain removing property have been proposed. Namely,
(1) a method of adhering a fluorine-containing resin film to a substrate with an adhesive (JP-A-8-084648, JP-A-7-232128 and JP-A-5-038782),
(2) a method of adhering a fluorine-containing resin film to a substrate by heat-sealing (JP-A-8-132571, JP-A-6-155670, JP-A-6-0555688),
(3) a method of coating, to a substrate, a two component curing type fluorine-containing resin composition containing an acrylic polymer as a coating agent for giving weather resistance and stain-proofing (JP-A-3-275860, JP-A-2-299839, JP-A-2-299838) and
(4) a method of coating a fluorine-containing thermoplastic resin composition mainly comprising vinylidene fluoride to a substrate (JP-A-7-003220, JP-A-6-287334, JP-A-2-274534)
   are known.

Further there is (5) a method of coating a hydrophilic colloid on one side of a plastic film and sticking a reverse side thereof on an outdoor article with an adhesive (JP-A-8-150681).

However in the above-mentioned methods (1) and (3), in order to finish the coated substrates into a jointed product having desired dimension and shape, it is necessary to previously remove a coated film at the jointed portions of the substrates by sand-blasting, wiping with a solvent, etc. before jointing. These treatments complicate processing steps.

Particularly in the method (1), a urethane, polyester or epoxy adhesive used is generally insufficient in weather resistance, moisture resistance and water resistance, and there is a problem that stability for a long period of time is poor because an adhesive layer between the film and the substrate is deteriorated gradually and blistering and peeling arise with a lapse of time.

Further in the above-mentioned conventional methods (1) to (4), since a fluorine-containing resin having high hydrophobic property such as tetrafluoroethylene/ethylene copolymer (ETFE) or vinylidene fluoride resin is used, a surface of a finished product becomes highly hydrophobic. In that case, there are problems as mentioned below.

Namely according to recent studies made by various research institutes, many of outdoor contaminants sticking on a surface of construction material are highly hydrophobic (lipophilic) ones such as exhaust gases from automobiles and plants. On the other hand, it is reported that hydrophobic stains easily adhere to a hydrophobic surface. Therefore according to the above-mentioned conventional techniques, though an adhering stain can be removed effectively, there is a problem that an effect of preventing stains from adhering (stain-proofing property) is insufficient.

Recently in the field of exterior materials particularly having a vinyl chloride resin substrate, not only stain removing property (post-cleaning property) after a lapse of time which is a feature of conventional fluorine-containing resin coating film but also a stain-proofing property after a lapse of short time from installation is demanded strongly.

Further there was a problem that a fluorine-containing resin film was expensive.

Also in the above-mentioned method (5), there was a problem that a stain-proofing property and weather resistance are difficult to be maintained for a long period of time because a layer of hydrophilic colloid agent to be provided as a stain-proofing layer is generally thin and also weather resistance of an adhesive layer is insufficient like the method (1).

In view of the facts mentioned above, an object of the present invention is to provide construction materials for interior and exterior use which have good stain-proofing property and are excellent in adhesion, weather resistance and stain removing property.

### DISCLOSURE OF INVENTION

The present invention relates to construction materials for interior and exterior use which are obtained by coating a resin composition comprising a thermoplastic resin and a hydrophilic compound to a substrate.

In that case, it is preferable that the thermoplastic resin is an acrylic polymer or a mixture of acrylic polymer and vinylidene fluoride.

Also it is preferable that the hydrophilic compound is an organometallic compound or a hydrophilic colloid compound.

Also it is preferable that a weight average molecular weight and a glass transition temperature of the acrylic polymer are from 10,000 to 500,000 and not less than 40°C, respectively and that the vinylidene fluoride polymer is at least one copolymer selected from the group consisting of vinylidene fluoride/tetrafluoroethylene copolymer, vinylidene fluoride/tetrafluoroethylene/hexafluoropropylene copolymer and vinylidene fluoride/tetrafluoroethylene/chlorotrifluoroethylene copolymer and the copolymer contains a vinylidene fluoride unit in an amount of 60 to 85 % by mole.

Further it is preferable that the substrate is a soft polyvinyl chloride sheet, soft polyvinyl chloride mesh sheet, hard polyvinyl chloride sheet, steel sheet laminated with polyvinyl chloride, wall paper, marking film, woven fabric, non-woven fabric, polycarbonate sheet, ABS resin sheet or a composite sheet thereof.

### BEST MODE FOR CARRYING OUT THE INVENTION

The present invention relates to the construction materials for interior and exterior use which are obtained by coating a resin, composition comprising a thermoplastic resin and a hydrophilic compound to a substrate.

In the present invention, by applying, to a substrate, the composition prepared by adding a compound having a hydrophilic group to a thermoplastic resin, a coating film is formed on the substrate. Since in the coating film, the above-mentioned hydrophilic compound is oriented and stabilized on or near the surface of the film, the construction materials being excellent in weather resistance, hardness, stain-proofing property and stain removing property can be obtained. Also an effect of enhancing heat-sealing property is exhibited as compared with the methods of using a highly crystalline fluorine-containing resin film and a curing type, fluorine-containing resin composition (the above-mentioned methods (1) and (3)).

The thermoplastic resin to be used in the present invention may be one which can be used as a coating agent dissolved or dispersed in an organic solvent or water. It is preferable that the thermoplastic resin is an acrylic polymer or a mixture of acrylic polymer and vinylidene fluoride polymer from the viewpoint of its solvent solubility and film forming property at low temperature.

The acrylic polymer which can be used in the present invention is not particularly limited as far as it is a thermoplastic acrylic polymer which has been used so far. Examples of the monomer to be used on the acrylic polymer are, for instance, esters such as methyl (meth)acrylate, ethyl (meth)acrylate, propyl (meth)acrylate, butyl (meth)acrylate, isobutyl (meth)acrylate, hexyl (meth)acrylate, 2-ethylhexyl (meth)acrylate, lauryl (meth)acrylate and stearyl (meth)acrylate.

Among them, methyl methacrylate is an essential component, and is required to be contained as a monomer component of the acrylic polymer in an amount of not less than 50 % by weight. When a proportion of methyl methacrylate is less than 50 % by weight, weather resistance, chemical resistance, compatibility between the above-mentioned resin components and hardness of a coating film become insufficient. The proportion is preferably not less than 60 % by weight.

A molecular weight of the acrylic polymer is preferably 1 × 10⁴ to 50 × 10⁴, more preferably 5 × 10⁴ to 25 × 10⁴ preferably in weight average molecular weight Mn converted based on polystyrene (converted based on polystyrene with gel permeation chromatography). When the weight average molecular weight converted based on polystyrene is less than 1 × 10⁴, flexibility, elasticity at bending and fatigue resistance in repeating use are poor, and weather resistance and chemical resistance cannot be obtained. When more than 50 × 10⁴, a viscosity becomes too high, which lowers workability at coating.

Also a glass transition temperature (hereinafter called "Tg") of the acrylic polymer is preferably not less than 40°C. When less than 40°C, a coating film becomes soft, and enough stain removing property and stain-proofing property cannot be obtained. The glass transition temperature is more preferably not less than 50°C.

The above-mentioned acrylic polymer can be obtained by usual method.

In the present invention the vinylidene fluoride copolymer is used to impart weather resistance, chemical resistance, water repellency and abrasion resistance inherent to a fluorine-containing resin to the composition of the present invention. Examples of the vinylidene fluoride copolymer are, for instance, one or two or more copolymers obtained by copolymerizing at least one monomer of tetrafluoroethylene (TFE), chlorotrifluoroethylene (CTFE), hexafluoropropylene (HFP) and trifluoropropylene with vinylidene fluoride (VdF). Among them, particularly VdF/TFE copolymer, VdF/TFE/HFP copolymer, VdF/TFE/CTFE copolymer and the like are preferred. From the viewpoint of solubility in an organic solvent, the copolymers having a VdF unit in an amount of 60 to 85 % by mole, especially 70 to 80 % by mole are preferred. A weight average molecular weight of those copolymers is usually from about 3 × 10⁴ to about 2 × 10⁴.

The above-mentioned vinylidene fluoride polymer may contain the above-mentioned monomer constituting the acrylic polymer as a monomer component. Examples of such a monomer are, for instance, acrylic monomers such as alkyl acrylate and alkyl methacrylate and a monomer mixture of such a monomer and monomer copolymerizable therewith.

Examples of the alkyl acrylate are, for, instance, methyl acrylate, ethyl, acrylate (EA), propyl acrylate, n-butyl acrylate (BA), isobutyl acrylate, n-amyl acrylate, isoamyl acrylate, n-hexyl acrylate, 2-ethylhexyl acrylate, lauryl acrylate, and the like. Among them, alkyl acrylate having alkyl of C1 to C4 is preferred. Examples of the alkyl methacrylate are, for instance, methyl methacrylate (MMA), ethyl methacrylate, propyl methacrylate, n-butyl methacrylate, isobutyl methacrylate, n-amyl methacrylate, isoamyl methacrylate, n-hexyl methacrylate, 2-ethylhexyl methacrylate, lauryl methacrylate, and the like. Among them, alkyl methacrylate having alkyl of C1 to C3 is preferred.

Examples of the monomer copolymerizable with the acrylic monomer are, for instance, unsaturated carboxylic acids such as acrylic acid, methacrylic acid, succinic acid and itaconic acid; amide compounds such as acrylamide, methacrylamide, N-methyl acrylamide, N-methyl methacrylamide, N-methylol acrylamide, N-methylol methacrylamide, N-alkyl acrylamide, N-alkyl methacrylamide, N,N-dialkyl acrylamide and N,N-dialkyl methacrylamide; acrylic esters such as 2-hydroxyethyl acrylate, N,N-dialkylaminoethyl acrylate, glycidyl acrylate and fluoroalkyl acrylate; methacrylic esters such as 2-hydroxyethyl methacrylate, N,N-dialkyl aminoethyl methacrylate, glycidyl methacrylate (GMA), fluoroalkyl methacrylate and ethylene glycol dimethacrylate; vinyl ether compounds such as allyl glycidylether; conjugated dienes such as 1,3-butadiene, isoprene and chloroprene; aromatic vinyl compounds such as styrene, α-methyl styrene, halogenated styrene and divinyl benzene; vinyl cyanide compounds such as acrylonitrile and methacrylonitrile; and the like. Also there are vinyl ester compounds such as Veova 9 and Veova 10 (products of Shell Chemical) which are vinyl ester mixtures of vinyl acetate and vinyl ester with branched alkyl. Those monomers are used solely or in a mixture of two or more thereof.

Among those monomers, methyl methacrylate, butyl acrylate and acrylic acid are preferred.

An amount of the acrylic monomer which can be used for obtaining the vinylidene fluoride polymer may be 20 to 300 parts by weight to 100 parts by weight of vinylidene fluoride.

The above-mentioned vinylidene fluoride polymer containing the acrylic monomer can be obtained by usual method. For example, seed polymerization is preferred. The seed polymerization can be carried out under the same conditions as in usual emulsion polymerization. For example, to water medium containing seed particles comprising vinylidene fluoride are added a surfactant, polymerization initiator, chain transfer agent and as case demands, chelating agent, pH control agent, solvent, etc., and then a reaction is carried out at a temperature of 20° to 90°C, preferably 20° to 80°C, more preferably 30° to 70°C for 0.5 to 6 hours.

An average particle size of the above-mentioned seed particles has a close relation to an average particle size of vinylidene fluoride polymer particles after the seed polymerization, and is preferably 20 to 250 nm in order to obtain 30 to 300 nm of an average particle size of vinylidene fluoride polymer particles.

In the seed polymerization, any of a method for charging the whole monomers in a reaction system in the presence of seed particles, a method for charging a part of monomers batchwise and after reacting them, charging remaining monomers continuously or dividedly or a method for charging the whole monomers continuously may be employed.

When the above-mentioned acrylic monomer is seed-polymerized by emulsion polymerization in the presence of seed particles, at first, there occurs swelling of the seed particles with the acrylic monomer and at that time, the mixture becomes in the state of an aqueous dispersion of the seed particles dissolved uniformly in the acrylic monomer, and then the acrylic monomer is polymerized by adding an initiator, thus forming single phase polymer blend particles, in which the molecular chains of the acrylic polymer and vinylidene fluoride polymer are entangled with each other. Further by copolymerizing the above-mentioned acrylic monomer with a polyfunctional monomer, suspected interpenetrating polymer network (S-IPN) can be formed. Examples of the polyfunctional monomer are monoglycol dimethacrylate, diglycol dimethacrylate, and the like.

With respect to amounts of the acrylic polymer and vinylidene fluoride polymer in combination use thereof, from the point that when an amount of the acrylic polymer is less than 10 parts by weight, a hardness of a coating film is lowered and enough stain-proofing property and stain removing property are difficult to obtain and also a gloss and adhesion to a substrate are lowered, an amount of the acrylic polymer may be from 10 to 100 parts by weight and an amount of the vinylidene fluoride polymer may be 90 to 0 parts by weight. From the viewpoint of a balance between weather resistance, chemical resistance and flexibility, it is preferable that the acrylic polymer is from 15 to 80 parts by weight and the vinylidene fluoride polymer is from 85 to 20 parts by weight.

The the hydrophilic compound is explained below.

In the present invention the hydrophilic compound is an organometallic compound or hydrophilic colloid compound as mentioned above.

At first the organometallic compound is explained.

In the present invention as the organometallic compound, there are:
an organometallic compound (A) having a releasing group to be hydrolyzed, an oligomer thereof or a cooligomer comprising two or more of the organometallic compounds (A), and
an organometallic compound (B) having a releasing group to be hydrolyzed, an oligomer thereof or a cooligomer comprising two or more of the organometallic compounds (B).
At least one of releasing groups to be hydrolyzed of the organometallic compound (B) has 4 or more carbon atoms and has carbon atoms more than any of releasing groups to be hydrolyzed of the organometallic compound (A).

It is preferable that the number of carbon atoms of releasing group to be hydrolyzed of the organometallic compound (A) is from 1 to 100 and the number of carbon atoms of at least one of releasing groups to be hydrolyzed of the organometallic compound (B) is from 4 to 1,000. Further it is preferable that the number of carbon atoms of all the releasing groups to be hydrolyzed of the organometallic compound (A) is not more than 3 and the number of carbon atoms of at least one of releasing groups to be hydrolyzed of the organometallic compound (B) is not less than 4. When the number of carbon atoms of at least one of releasing groups to be hydrolyzed of the organometallic compound (B) is not less than 4, the releasing group to be hydrolyzed exhibits a defoaming ability at mixing of compositions before hydrolyzing. On the other hand, the organometallic compound (A) comes out over a surface of a coating film after forming of the film and is subject to hydrolyzing to make the surface of the film hydrophilic.

More concretely the above-mentioned organometallic compound is an organometallic compound represented by the formula (1):

X¹_{b}M¹(OR¹)ₐR²_{c} (1)

wherein a is 0 or an integer of 1 to 6, b is 0 or an integer of 1 to 5, c is 0 or an integer of 1 to 6, provided that a + b + c ≧ 3 and a and c are not zero at the same time, X¹ are the same or different, and each is hydrogen atom or a monovalent organic group which has 1 to 5,000 carbon atoms and may contain oxygen atom, nitrogen atom, fluorine atom, silicon atom and/or chlorine atom, M¹ is a metal atom having at least three valences, R¹ are the same or different, and each is hydrogen atom, a siloxane residue or a monovalent organic group which has 1 to 100 carbon atoms and may contain oxygen atom, nitrogen atom, fluorine atom and/or chlorine atom, R² are the same or different, and each is an organic group which has 1 to 1,000 carbon atoms, has a chelating ability and may contain oxygen atom, nitrogen atom, fluorine atom and/or chlorine atom;
an oligomer therefor; or
a cooligomer comprising two or more of said organometallic compounds;
   or
an organometallic compound represented by the formula (2):

   X²ₑM²(OR¹⁵)_{d}R¹⁶_{f} (2)

   wherein d is 0 or an integer of 1 to 6, e is 0 or an integer of 1 to 5, f is 0 or an integer of 1 to 6, provided that d + e + f ≧ 3 and d and f are not zero at the same time, X² are the same or different, and each is hydrogen atom or a monovalent organic group which has 1 to 5,000 carbon atoms and may contain oxygen atom, nitrogen atom, fluorine atom, silicon atom and/or chlorine atom, M² is a metal atom having at least three valences, R¹⁵ are the same or different, and each is hydrogen atom, a siloxane residue or a monovalent organic group which has 1 to 1,000 carbon atoms and may contain oxygen atom, nitrogen atom, fluorine atom and/or chlorine atom provided that at least one of R¹⁵ has 4 or more carbon atoms and has carbon atoms more than any of R¹, R¹⁶ are the same or different, and each is an organic group which has 1 to 1,000 carbon atoms, has a chelating ability and may contain oxygen atom, nitrogen atom, fluorine atom and/or chlorine atom;
an oligomer thereof; or
a cooligomer comprising two or more of said organometallic compounds.

Namely the preferred organometallic compounds are the organometallic compound represented by the formula (1), an oligomer thereof or a cooligomer comprising two or more of said organometallic compounds (hereinafter referred to as "Compound 1") and the organometallic compound represented by the formula (2), an oligomer thereof or a cooligomer comprising two or more of said organometallic compounds (hereinafter referred to as "Compound 2").

Compound 1 imparts hydrophilic property to a coating film and functions to form a coating film having excellent stain-proofing property and ability to prevent stains from sticking due to rain water on the coating film surface.

At first Compound 1 is explained below.

The above-mentioned a is 0 or an integer of 1 to 6 from the viewpoint of surface concentrating property, hydrolyzability and releasing property, and is preferably an integer of 2 to 4.

The above-mentioned b is 0 or an integer of 1 to 5 from the viewpoint of surface concentrating property and hydrophilic property, and is preferably 0 or 1.

The above-mentioned c is 0 or an integer of 1 to 6 from the viewpoint of surface concentrating property, hydrolyzability and releasing property, and is preferably 0 or an integer of 1 to 3.

A total amount of a, b and c is decided based on valence of the metal atom M¹. In the formula (1), since either of OR¹ or R² is necessary for stain-proofing property, surface concentrating property and hydrolyzability, there is no case where both of a and c are zero at the same time, and the total amount of a, b and c is at least 3.

The above X¹ may be hydrogen atom and is preferably a monovalent organic group of, for example, the following (1) to (3) which has 1 to 5,000 carbon atoms and may contain oxygen atom, nitrogen atom, fluorine atom, silicon atom and/or chlorine atom.
(1) As the organic group X¹, there are, for example, H(CH₂)ₚ, (CH₃)₂CH, H(CH₂)ₚC=0, F(CF₂)_{q}(CH₂)ₚ, (CF₃)₂CH, H(CF₂)_{q}(CH₂)ₚ, and the like, wherein p is 0 or an integer of 1 to 6, q is an integer of 1 to 10, a part of fluorine atoms may be substituted by chlorine atoms. Those organic groups may be linear or branched.
   Examples thereof are, for instance, CH₃, CH₃CH₂, CH₃CH₂CH₂, (CH₃)₂CH, CF₃CH₂, CF₃CF₂CH₂, (CF₃)₂CH, F(CF₂)₄CH₂CH₂, F(CF₂)₈CH₂CH₂, H(CF₂)₄CH₂, and the like. From the viewpoint of surface concentrating property, hydrolyzability and releasing property, CF₃CF₂CH₂ and (CF₃)₂CH are preferable.
(2) Also as the organic group X¹, there are, for example, organic groups having a functional group such as NH₂, secondary amino group, tertiary amino group, OH, NCO, CO₂H, CO₂Na, CO₂K, SO₃H, SO₂Na, SO₃K, epoxy group and oxyethylene group (CH₂CH₂O), and the like.
   Examples thereof are, for instance, H₂N(CH₂)₃, OCN(CH₂)₃, CH₃O(CH₂CH₂O)(CH₂)₃, CH₃O(CH₂CH₂O)₅(CH₂)₃, CH₃O(CH₂CH₂O)₁₀(CH₂)₃, 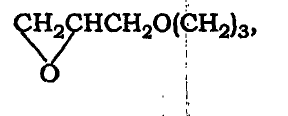 and the like. From the viewpoint of hydrophilic property, compatibility and adhesion, OCN(CH₂)₃ and CH₃O(CH₂CH₂O)₅(CH₂)₃ are preferable.
(3) Further as the organic group X¹, there are, for example, polymerizable organic groups which may contain oxygen atom, nitrogen atom, fluorine atom, chlorine atom, silicon atom, or the like.
   Examples thereof are, for instance, CH₂=C(CH₃)CO₂(CH₂)₃, CH₂=CH, CH₂=CHCH₂, CH₂=CHO(CH₂)₃, CH₂=CHOCO(CH₂)₃, CH₂=CHC₆H₄, CH₂=CHCO₂(CH₂)₃ and the like. From the viewpoint of polymerizability and availability, CH₂=C(CH₃)CO₂(CH₂)₃ and CH₂=CHO(CH₂)₃ are preferable.
   In the present invention, polymers or copolymers which have a molecular weight of 2,000 to 200,000, preferably 5,000 to 20,000 and are prepared by polymerizing or copolymerizing the compounds represented by the formula (1) which have the polymerizable organic group as mentioned above, are also preferable.
   The above R¹ are the same or different, and each may contain oxygen atom, nitrogen atom, fluorine, atom and/or chlorine atom and is hydrogen atom, a siloxane residue or a monovalent organic group having 1 to 100 carbon atoms from the viewpoint of surface concentrating property, hydrolyzability and releasing property.
   Among the R¹, examples of the preferred monovalent organic group are, for instance, H(CH₂)ₘ, (CH₃)₂CH, H(CH₂)ₘC=O, F(CF₂)ₙ(CH₂)ₘ, (CF₃)₂CH, H(CF₂)ₙ(CH₂)ₘ, F(CF₂)ₙ(CH₂)ₘC=O, H(CF₂)ₙ(CH₂)ₘC=O, (F(CF₂)ₙ(CH₂)ₘ)₂N, ((CF₃)₂CH)₂N, (H(CF₂)ₙ(CH₂)ₘ)₂N, F(CF₂)ₙO(CF(CF₃)CF₂O)ₘCF(CF₃)C=O, (F(CF₂)ₙ(CH₂)ₘ)₂C=N, ((CF₃)₂CH)₂C=N, (H(CF₂)ₙ(CH₂)ₘ)₂C=N, F(CF₂)ₙ(CH₂)ₘC=ONR³, H(CF₂)ₙ(CH₂)ₘC=ONR³, F(CF₂)ₙ(CH₂)ₘC=CH₂, H(CF₂)ₙ(CH₂)ₘC=CH₂, F(CF₂)ₙ(CH₂)ₘC=CF₂ and H(CF₂)ₙ(CH₂)ₘC=CF₂, wherein m is 0 or an integer of 1 to 6, n is an integer of 1 to 10, R³ is alkyl which has 1 to 6 carbon atoms and may be linear or branched.
   Examples of those organic groups are, for instance, CF₃CH₂, CF₃CF₂CH₂, CF₃(CF₂)₂CH₂, CF₃(CF₂)₃CH₂CH₂, (CF₃)₂CH, CF₃(CF₂)₇CH₂CH₂, H(CF₂)₂CH₂, H(CF₂)₃CH₂, H(CF₂)₄CH₂, CF₃C=O, CF₃CF₂C=O, CF₃(CF₂)₆C=O, CF₃(CF₂)₇C=O, and the like. From the viewpoint of surface concentrating property, hydrolyzability and releasing property, CF₃CH₂, CF₃CF₂CH₂, CF₃(CF₂)₂CH₂, CF₃(CF₂)₃CH₂CH₂, CF₃C=O and CF₃CF₂C=O are preferred, and CF₃CH₂ and CF₃CF₂CH₂ are more preferable.
   Among the above R¹, examples of the siloxane residue are, for instance, (Si(OR¹)₂O)ₙR¹, in which R¹ is the same as the monovalent organic group among the above-mentioned R¹, and the like.
   The above R² may be the same or different and are organic groups which have a chelating ability and may contain fluorine atom and/or chlorine atom. It is preferable that R² have the number of carbon atoms of 1 to 20, preferably 2 to 10 from the viewpoint of surface concentrating property, hydrolyzability and releasing property.
   In the present invention, since the organometallic compound, in which an organic group having such a chelating ability is bonded, is used, there can be obtained effects of being excellent in storage stability, reactivity, solubility and compatibility.
   Examples of the preferred compound giving an organic group having the chelating ability as mentioned above are, for example, β-diketones such as 2,4-pentanedione and 2,4-heptanedione; keto esters such as methyl acetoacetate, ethyl acetoacetate and butyl acetoacetate; hydroxycarboxylic acids such as lactic acid, methyl lactate, ethyl lactate, ammonium lactate, salicylic acid, methyl salicylate, ethyl salicylate, malic acid, ethyl malate, tartaric acid, ethyl tartrate, an ester and a salt thereof; keto-alcohols such as 4-hydroxy-4-methyl-2-pentanone, 4-hydroxy-2-pentanone, 4-hydroxy-2-heptanone and 4-hydroxy-4-methyl-2-heptanone; amino-alcohols such as monoethanolamine, diethanolamine, triethanolamine, N-methylmonoethanolamine, N-ethylmonoethanolamine, N,N-dimethylethanolamine and N,N-diethylethanolamine; active hydrogen compounds with enolic form such as diethyl malonate, methylolmelamine, methylolurea and methylolacrylamide; and the like. From the viewpoint of surface concentrating property and stability, more preferable are β-diketones, keto esters and compounds which are obtained by substituting a part or the whole of hydrogen atoms of the above-mentioned compounds by fluorine atom and/or chlorine atom.
   Examples of the above-mentioned metal atom M¹ are, for instance, B, Al, Ga, In, Tl, Sc, Y, La, Ac, Si, Ge, Sn, Pb, Ti, Zr, Hf, As, Sb, Bi, V, Nb, Ta, Te, Po, Cr, Mo, W, At, Mn, Tc, Re, Fe, Co, Ni, Ru, Rh, Pd, Os, Ir, Pt and the like. From the viewpoint of synthesis and availability, Al, Ti, B, Zr or Si is preferable.
   As the organometallic compound represented by the formula (1), oligomer thereof or cooligomer comprising two or more of the organometallic compounds, there are, for example, the following organometallic compounds or oligomers or cooligomers obtained therefrom.
   In case where in the formula (1), b is zero, there are: 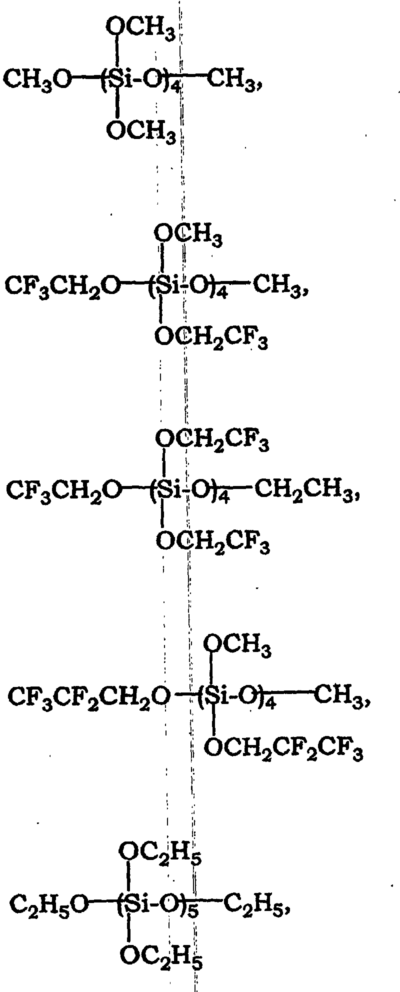 B(OCH₃)₃, B(OCH₂CF₂CF₃)₃, B(OCH(CF₃)₂)₃, B(OCH₂CH₂C₈F₁₇)₃, B(OCH₂CF₂CF₃)₂(OCH₃), B(OCH(CF₃)₂)₂(OCH₃), B(OCH₂CH₂C₈F₁₇)₂(OCH₃), B(OCH₂CF₂CF₃)₂(OH), B(OCH(CF₃)₂)₂(OH), B(OCH₂CH₂C₈F₁₇)₂(OH), B(OCOCF₃)₃, B(OCOC₂F₅)₃, B(OCOC₈F₁₇)₃, B(OCOCF₃)₂(OCH₃), B(OCOC₂F₅)₂(OCH₃), B(OCOC₈F₁₇)₂(OCH₃), Al(OCH₂CF₂CF₃)₃, Al(OCH(CF₃)₂)₃, Al(OCH₂CH₂C₈F₁₇)₃, Al(OCH₂CF₂CF₃)₂(OCH₃), Al(OCH(CF₃)₂)₂(OCH₃), Al(OCH₂CH₂C₈F₁₇)₂(OCH₃), Al(OCH₂CF₂CF₃)₂(OH), Al(OCH(CF₃)₂)₂(OH), Al(OCH₂CH₂C₈F₁₇)₂(OH), Al(OCH₂CF₂CF₃)₂(OH), Al(OCH(CF₃)₂)₂(OH), Al(OCH₂CH₂C₈F₁₇)₂(OH), Al(OCOCF₃)₃, Al(OCOC₂F₅)₃, Al(OCOC₈F₁₇)₃, Al(OCOCF₃)₂(OCH₃), Al(OCOC₂F₅)₂(OCH₃), Al(OCOC₈F₁₇)₂(OCH₃), Al(CF₃COCHCOCF₃)₃, Al(CF₃COCHCOCF₃)₂(CH₃COCHCOCH₃), Al(CF₃COCHCOOC₂H₅)₃, Al(CF₃COCHCOOC₂H₅)₃, Al(CF₃COCHCOOC₂H₅)₂(CH₃COCHCOCH₃), Al(CF₃COCHCOCF₃)₂(OH), Al(CF₃COCHCOOC₂H₅)₂(OH), Ti(OCH₂CF₂CF₃)₄, Ti(OCH(CF₃)₂)₄, Ti(OCH₂CH₂C₈F₁₇)₄, Ti(OCH₂CF₂CF₃)₂(OCH₃)₂, Ti(OCH(CF₃)₂)₂(OCH₃)₂, Ti(OCH₂CH₂C₈F₁₇)₂(OCH₃)₂, Ti(OCH₂CF₂CF₃)₂(OCH(CH₃)₂)₂, Ti(OCH(CF₃)₂)₂(OCH(CH₃)₂)₂, Ti(OCH₂CH₂C₈F₁₇)₂(OCH(CH₃)₂)₂, Ti(OCH₂CF₂CF₃)₂(OH)₂, Ti(OCH(CF₃)₂)₂(OH)₂, Ti(OCH₂CH₂C₈F₁₇)₂(OH)₂, Ti(OCOCF₃)₄, Ti(OCOC₂F₅)₄, Ti(OCOC₈F₁₇)₄, Ti(OCOCF₃)₂(OCH₃)₂, Ti(OCOC₂F₅)₂(OCH₃)₂, Ti(OCOC₈F₁₇)₂(OCH₃)₂, Ti(CF₃COCHCOCF₃)₂(OCH(CH₃)₂)₂ and Ti(CF₃COCHCOOC₂H₅)₂(OCH(CH₃)₂)₂.
   In case where in the formula (1), b is 1, there are: HSi(OCH₂CF₃)₃, HSi(OCH₂CF₂CF₃)₃, HSi(OCH(CF₃)₂)₃, HSi(OCH₂CH₂C₈F₁₇)₃, HSi(OCH₂CF₂CF₃)₂(OCH₃), HSi(OCH(CF₃)₂)₂(OCH₃), HSi(OCH₂CH₂C₈F₁₇)₂(OCH₃), HSi(OCH₂CF₂CF₃)₂(OH), HSi(OCH(CF₃)₂)₂(OH), HSi(OCH₂CH₂C₈F₁₇)₂(OH), HSi(OCOCF₃)₃, HSi(OCOC₂F₅)₃, HSi(OCOC₈F₁₇)₃, HSi(OCOCF₃)₂(OCH₃), HSi(OCOC₂F₅)₂(OCH₃), HSi(OCOC₈F₁₇)₂(OCH₃), CH₃Si(OCH₃)₃, CH₃Si(OCH₂CF₃)₃, CH₃Si(OCH₂CF₂CF₃)₃, CH₃Si(OCH(CF₃)₂)₃, CH₃Si(OCH₂CH₂C₈F₁₇)₃, CH₃Si(OCH₂CF₂CF₃)₂(OCH₃), CH₃Si(OCH(CF₃)₂)₂(OCH₃), CH₃Si(OCH₂CH₂C₈F₁₇)₂(OCH₃), CH₃Si(OCH₂CF₂CF₃)₂(OH), CH₃Si(OCH(CF₃)₂)₂(OH), CH₃Si(OCH₂CH₂C₈F₁₇)₂(OH), CH₃Si(OCOCF₃)₃, CH₃Si(OCOC₂F₅)₃, CH₃Si(OCOC₈F₁₇)₃, CH₃Si(OCOCF₃)₂(OCH₃), CH₃Si(OCOC₂F₅)₂(OCH₃), CH₃Si(OCOC₈F₁₇)₂(OCH₃), H₂N(CH₂)₃Si(OCH₂CF₃)₃, H₂N(CH₂)₃Si(OCH₂CF₂CF₃)₃, H₂N(CH₂)₃Si(OCH(CF₃)₂)₃, H₂N(CH₂)₃Si(OCH₂CH₂C₈F₁₇)₃, H₂N(CH₂)₃Si(OCH₂CF₂CF₃)₂(OCH₃), H₂N(CH₂)₃Si(OCH(CF₃)₂)₂(OCH₃), H₂N(CH₂)₃Si(OCH₂CH₂C₈F₁₇)₂(OCH₃), H₂N(CH₂)₃Si(OCH₂CF₂CF₃)₂(OH), H₂N(CH₂)₃Si(OCH(CF₃)₂)₂(OH), H₂N(CH₂)₃Si(OCH₂CH₂C₈F₁₇)₂(OH), H₂N(CH₂)₃Si(OCOCF₃)₃, H₂N(CH₂)₃Si(OCOC₂F₅)₃, H₂N(CH₂)₃Si(OCOC₈F₁₇)₃, H₂N(CH₂)₃Si(OCOCF₃)₂(OCH₃), H₂N(CH₂)₃Si(OCOC₂F₅)₂(OCH₃), H₂N(CH₂)₃Si(OCOCF₃)₂(OCH₃), OCN(CH₂)₃Si(OCH₂CF₃)₃, OCN(CH₂)₃Si(OCH₂CF₂CF₃)₃, OCN(CH₂)₃Si(OCH(CF₃)₂)₃, OCN(CH₂)₃Si(OCH₂CH₂C₈F₁₇)₃, OCN(CH₂)₃Si(OCH₂CF₂CF₃)₂(OCH₃), OCN(CH₂)₃Si(OCH(CF₃)₂)₂(OCH₃), OCN(CH₂)₃Si(OCH₂CH₂C₈F₁₇)₂(OCH₃), OCN(CH₂)₃Si(OCOCF₃)₃, OCN(CH₂)₃Si(OCOC₈F₁₇)₃, OCN(CH₂)₃Si(OCOCF₃)₂(OCH₃), OCN(CH₂)₃Si(OCOC₂F₅)₂(OCH₃), OCN(CH₂)₃Si(OCOC₈F₁₇)₂(OCH₃), CH₃O(CH₂CH₂O)_{g}(CH₂)₃Si(OCH₂CF₃)₃, CH₃O(CH₂CH₂O)_{g}(CH₂)₃Si(OCH₂CF₂CF₃)₃, CH₃O(CH₂CH₂O)_{g}(CH₂)₃Si(OCH(CF₃)₂)₃, CH₃O(CH₂CH₂O)_{g}(CH₂)₃Si(OCH₂CH₂C₈F₁₇)₃, CH₃O(CH₂CH₂O)_{g}(CH₂)₃Si(OCH₂CF₂CF₃)₂(OCH₃), CH₃O(CH₂CH₂O)_{g}(CH₂)₃Si(OCH(CF₃)₂)₂(OCH₃), CH₃O(CH₂CH₂O)_{g}(CH₂)₃Si(OCH₂CH₂C₈F₁₇)₂(OCH₃), CH₃O(CH₂CH₂O)_{g}(CH₂)₃Si(OCH₂CF₂CF₃)₂(OH), CH₃O(CH₂CH₂O)_{g}(CH₂)₃Si(OCH(CF₃)₂)₂(OH), CH₃O(CH₂CH₂O)_{g}(CH₂)₃Si(OCH₂CH₂C₈F₁₇)₂(OH), CH₃O(CH₂CH₂O)_{g}(CH₂)₃Si(OCOCF₃)₃, CH₃O(CH₂CH₂O)_{g}(CH₂)₃Si(OCOC₂F₅)₃, CH₃O(CH₂CH₂O)_{g}(CH₂)₃Si(OCOC₈F₁₇)₃, CH₃O(CH₂CH₂O)_{g}(CH₂)₃Si(OCOCF₃)₂(OCH₃), CH₃O(CH₂CH₂O)_{g}(CH₂)₃Si(OCOC₂F₅)₂(OCH₃), CH₃O(CH₂CH₂O)_{g}(CH₂)₃Si(OCOC₈F₁₇)₂(OCH₃), wherein g is an integer of 1 to 100, CH₂=C(CH₃)CO₂(CH₂)₃Si(OCH₂CF₃)₃, CH₂=C(CH₃)CO₂(CH₂)₃Si(OCH₂CF₂CF₃)₃, CH₂=C(CH₃)CO₂(CH₂)₃Si(OCH(CF₃)₂)₃, CH₂=C(CH₃)CO₂(CH₂)₃Si(OCH₂CH₂C₈F₁₇)₃, CH₂=C(CH₃)CO₂(CH₂)₃Si(OCH₂CF₂CF₃)₂(OCH₃), CH₂=C(CH₃)CO₂(CH₂)₃Si(OCH(CF₃)₂)₂(OCH₃), CH₂=C(CH₃)CO₂(CH₂)₃Si(OCH₂CH₂C₈F₁₇)₂(OCH₃), CH₂=C(CH₃)CO₂(CH₂)₃Si(OCH₂CF₂CF₃)₂(OH), CH₂=C(CH₃)CO₂(CH₂)₃Si(OCH(CF₃)₂)₂(OH), CH₂=C(CH₃)CO₂(CH₂)₃Si(OCH₂CH₂C₈F₁₇)₂(OH), CH₂=C(CH₃)CO₂(CH₂)₃Si(OCOCF₃)₃, CH₂=C(CH₃)CO₂(CH₂)₃Si(OCOC₂F₅)₃, CH₂=C(CH₃)CO₂(CH₂)₃Si(OCOC₈F₁₇)₃, CH₂=C(CH₃)CO₂(CH₂)₃Si(OCOCF₃)₂(OCH₃), CH₂=C(CH₃)CO₂(CH₂)₃Si(OCOC₂F₅)₂(OCH₃) and CH₂=C(CH₃)CO₂(CH₂)₃Si(OCOC₈F₁₇)₂(OCH₃).
   Among the above-mentioned cooligomers, as materials for cooligomers other than those prepared from the organometallic. compound of the formula (1), in which b and c are zero at the same time and M is Si, there are compounds mentioned below. Si(OCH₃)₄, Si(OC₂H₅)₄, Si(OCH₂CF₂CF₃)₄, Si(OCH(CF₃)₂)₄, Si(OCH₂CH₂C₈F₁₇)₄, Si(OCH₂CF₂CF₂H)₄, Si(OCH₂C₄F₈H)₄, Si(OCH₂CF₂CF₃)₂(OCH₃)₂, Si(OCH(CF₃)₂)₂(OCH₃)₂, Si(OCH₂CH₂C₈F₁₇)₂(OCH₃)₂, Si(OCH₂CF₂CF₂H)₂(OCH₃)₂, Si(OCH₂CF₂CF₂H)₂(OC₄H₉)₂, Si(OCH₂CF₂CF₃)₂(OH)₂, Si(OCH(CF₃)₂)₂(OH)₂, Si(OCH₂CH₂C₈F₁₇)₂(OH)₂, Si(OCH₂CF₂CF₂H)₂(ON=CCH₃(C₂H₅))₂, Si(OCOCF₃)₄, Si(OCOC₂F₅)₄, Si(OCOC₈F₁₇)₄, Si(OCOCF₃)₂(OCH₃)₂, Si(OCOC₂F₅)₂(OCH₃)₂, Si(OCOC₈F₁₇)₂(OCH₃)₂, Si(OCH₂CF₂CF₃)₃(OCH₂CH₂)ₕOCH₃, Si(OCH(CF₃)₂)₃(OCH₂CH₂)ₕOCH₃, Si(OCH₂CH₂C₈F₁₇)₃(OCH₂CH₂)ₕOCH₃, Si(OCH₂CF₂CF₃)₂(OCH₃)(OCH₂CH₂)ₕOCH₃, Si(OCH(CF₃)₂)₂(OCH₃)(OCH₂CH₂)ₕOCH₃, Si(OCH₂CH₂C₈F₁₇)₂(OCH₃)(OCH₂CH₂)ₕOCH₃, Si(OCH₂CF₂CF₃)₂(OH)(OCH₂CH₂)ₕOCH₃, Si(OCH(CF₃)₂)₂(OH)(OCH₂CH₂)ₕOCH₃, Si(OCH₂CH₂C₈F₁₇)₂(OH)(OCH₂CH₂)ₕOCH₃, Si(OCOCF₃)₃(OCH₂CH₂)ₕOCH₃, Si(OCOC₂F₅)₃(OCH₂CH₂)ₕOCH₃, Si(OCOC₈F₁₇)₃(OCH₂CH₂)ₕOCH₃, Si(OCOCF₃)₂(OCH₃)(OCH₂CH₂)ₕOCH₃, Si(OCOC₂F₅)₂(OCH₃)(OCH₂CH₂)ₕOCH₃, Si(OCH₂CH₂C₈F₁₇)₂(OCH₃)(OCH₂CH₂)ₕOCH₃, Si(OCH₃)₄, Si(OC₂H₅)₄, Si(OC₄H₉)₄ and Si(ON=CCH₃(C₂H₅))₄, wherein h is an integer of 1 to 100.
   Among the above-mentioned organometallic compounds, those having R¹ of C1 to C3 are preferred.
   Examples of the oligomer or cooligomer of the present invention are linear, branched, cyclic and three-dimensional oligomers or cooligomers.
   In the present invention, the degree of polymerization of the oligomer or cooligomer is preferably from 2 to 100, more preferably from 4 to 20. When the degree of polymerization is smaller, a boiling point of the oligomer or cooligomer is easily lowered, and the oligomer or cooligomer is easily vaporized at coating and is difficult to be incorporated into a coating film. When the degree of polymerization exceeds 100, there is a tendency that control of the degree of polymerization at synthesis is difficult, a viscosity of the oligomer or cooligomer easily becomes high and workability becomes inferior. When in the formula (1), a is 4, b and c are zero, M¹ is Si and fluorine atom is contained, it is preferable that the degree of polymerization of the oligomer or cooligomer is from 2 to 40 from the viewpoint of appearance, anti-sagging property and alkali resistance of a coating film. There are, or instance, oligomers or cooligomers such as: 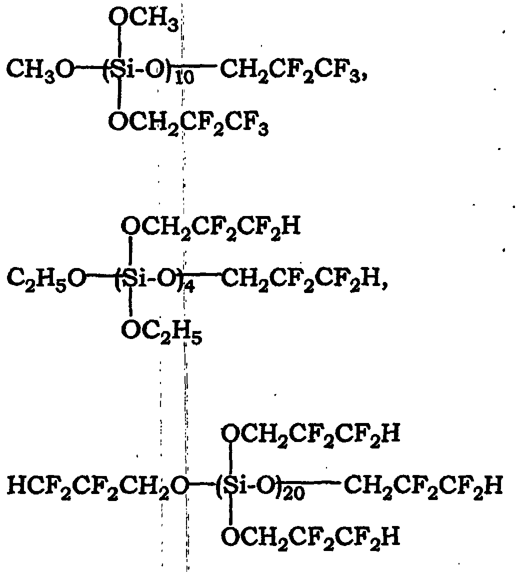 and the like.
   The organometallic compound represented by the formula (1) can be synthesized by reacting one or more of a metal halide, alkyl metal, metal alkoxide, metal chelate and the like, said metal constituting the organometallic compound, with one or more of alcohol, carboxylic acid, oxime, β-diketone, β-keto ester, alkali metal alkoxide, alkali metal salt of carboxylic acid and the like, said organic moieties corresponding to the organic group of the organometallic compound, with stirring usually at about 1 atm at a temperature of - 20°C to 100°C, preferably 0° to 80°C or preferably under dried inert gas atmosphere, in the presence of a catalyst, if necessary. Also a reaction solvent can be used.
   In such a synthesizing method, by adjusting the temperature to 0° to 200°C, preferably 20° to 150°C and adding water gradually to the organometallic compound of the formula (1) so that the reaction solution becomes as uniform as possible, the organometallic compound of the formula (1) reacts with water to be hydrolyzed and at nearly the same time, condensed to give an oligomer of the organometallic compound.
   Also in the above-mentioned synthesizing method, use of at least two kinds of the organometallic compounds represented by the formula (1) can give a cooligomer. The cooligomer may contain two or more metals in its molecular chain.
   The degree of polymerization of the oligomer or cooligomer of the present invention can be regulated with a molar ratio of reacting water to, for example, the organometallic compound of the formula (1). For example, when the reaction is carried out within the molar ratio of [H₂O]/[Organometallic compound of formula (1)] = 0.4 to 0.95, there can be obtained an oligomer or cooligomer having the degree of polymerization of about 2 to about 20. Also by adjusting the molar ratio within the range of 0.94 to 1.0, there can be obtained an oligomer or cooligomer having the degree of polymerization of more than 20 and not more than 100. A ratio (molar ratio) of constructive units constituting a cooligomer obtained by using two kinds of organometallic compounds of the formula (1) is preferably from 1/9 to 9/1.
   Examples of the catalyst are, for instance, acids and alkalis such as hydrochloric acid, sulfuric acid, acetic acid, paratoluene sulfonic acid, ammonia, trimethylamine, triethylamine, tributylamine, 1,8-diazabicyclo(5,4,0)undecene-7(DBU), (-)-sparteine, 4-N,N-dimethylaminopyridine, monoethanolamine, triethanolamine, N,N,N',N'-tetramethylethylenediamine, sodium hydroxide, potassium hydroxide, sodium hydrogencarbonate, potassium t-butoxide, sodium ethoxide, tetramethylammonium hydroxide, tetramethylammonium hydrogensulfate, tetrabutylammonium hydroxide and tetrabutylammonium hydrogensulfate; and organometallic compounds and organometallic salts such as dibutyltindilaurate, dibutyltinacetate, dioctyltinmaleate, tetraisopropyl titanate and tetrabutyl titanate. From a point that a residue of the catalyst is easily removed from a product, preferable are hydrochloric acid, ammonia and triethylamine.
   Examples of the reaction solvent are alcohols such as methanol, ethanol, isopropanol, n-butanol, t-butanol, octanol, 2,2,2-trifluoroethanol and 2,2,3,3,3-pentafluoroethanol; ethers such as tetrahydrofuran, 1,4-dioxane and tetrahydropyran; ketones and esters such as acetone and 2-methoxyethyl acetate; amides such as N,N-dimethylformamide, N,N-dimethylacetamide, N-methylacetamide, N-methylpyrrolidone and polyoxazoline; carboxylic acids such as acetic acid, trifluorcocetic acid and F(CF₂)₈COOH; fluorine-containing aromatic compounds such as trifluoromethylbenzene and m-bis(trifluoromethyl)benzene; and the like. From the viewpoint of high solubility, 2,2,2-trifluoroethanol, 2,2,3,3,3-pentafluoroethanol, tetrahydrofuran, 1,4-dioxane and tetrahydropyran are preferable.
   Compound 1 represented by the formula (1) is hydrolyzed in a coaling film to make a surface of the coating film hydrophilic and endow the coating film with excellent stain-proofing property, low electrostatically charging property and anti-haze property.
   In Compound 1 of the formula (1), since at least one of R¹ and R² has fluorine atom, there can be obtained effects of, for example, being excellent in surface concentrating property and repeatability of surface hydrophilization of a coating film.
   Also when a fluorine atom content in Compound 1 of the formula (1) is at least 5 % by weight, preferably 15 to 60 % by weight, there can be obtained effects of, for example, being excellent in surface concentrating property and repeatability of surface hydrophilization of a coating film.
   Further there can be obtained effects of, for example, being excellent in appearance, anti-sagging property and alkali resistance of a coating film when in the formula (1), a is 4, b and c are zero, M¹ is Si and the degree of polymerization of the oligomer of the organometallic compound having fluorine atom or the cooligomer comprising at least two of the above-mentioned organometallic compounds is not less than 2 and not more than 100.
   Subsequently Compound 2 represented by the formula (2) exhibits not only stain-proofing property but also a defoaming ability by a hydrophobic group having a long chain of R¹⁵ and/or R¹⁶, and after forming of a coating film, becomes hydrophilic because R¹⁵ and/or R¹⁶ is released by hydrolyzing. Therefore even in case of combination with Compound 1, hydrophilic property of the coating film surface which was imparted by Compound 1 is not lowered.
   Preferred Compound 2 are as follows.
   The above-mentioned d is 0 or an integer of 1 to 6 from the viewpoint of surface concentrating property, hydrolyzability and releasing property, and is preferably an integer of 2 to 4.
   The above-mentioned e is 0 or an integer of 1 to 5 from the viewpoint of surface concentrating property and hydrophilic property, and is preferably 0 or 1.
   The above-mentioned f is 0 or an integer of 1 to 6 from the viewpoint of surface concentrating property, hydrolyzability and releasing property, and is preferably 0 or an integer of 1 to 3.
   A total amount of d, e and f is decided based on valence of the metal atom M². In the formula (2), since either of OR¹⁵ or R¹⁶ is necessary for stain-proofing property, surface concentrating property and hydrolyzability, there is no case where both of d and f are zero at the same time, and the total amount of d, e and f is at least 3.
   The above X² may be hydrogen atom and is preferably a monovalent organic group of, for example, the following (4) to (6) which has 1 to 5,000 carbon atoms and may contain oxygen atom, nitrogen atom, fluorine atom, silicon atom and/or chlorine atom.
(4) As the organic group X², there are, for example, H(CH₂)ₚ, (CH₃)₂CH, H(CH₂)ₚC=0, F(CF₂)_{q}(CH₂)ₚ, (CF₃)₂CH, H(CF₂)_{q}(CH₂)ₚ, and the like, wherein p is 0 or an integer of 1 to 6, q is an integer of 1 to 10, a part of fluorine atoms may be substituted by chlorine atoms. Those organic groups may be linear or branched.
   Examples thereof are, for instance, CH₃, CH₃CH₂, CH₃CH₂CH₂, (CH₃)₂CH, CF₃CH₂, CF₃CF₂CH₂, (CF₃)₂CH, F(CF₂)₄CH₂CH₂, F(CF₂)₈CH₂CH₂, H(CF₂)₄CH₂, and the like. From the viewpoint of surface concentrating property, hydrolyzability and releasing property, CF₃CF₂CH₂ and (CF₃)₂CH are preferable.
(5) Also as the organic group X², there are, for example, organic groups having a functional group such as NH₂, secondary amino group, tertiary amino group, OH, NCO, CO₂H, CO₂Na, CO₂K, SO₃H, SO₂Na, SO₃K, epoxy group, oxyethylene group (CH₂CH₂O), and the like.
   Examples thereof are, for instance, H₂N(CH₂)₃, OCN(CH₂)₃, CH₃O(CH₂CH₂O)(CH₂)₃, CH₃O(CH₂CH₂O)₅(CH₂)₃, CH₃O(CH₂CH₂O)₁₀(CH₂)₃, 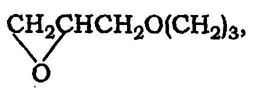 and the like. From the viewpoint of hydrophilic property, compatibility and adhesion, OCN(CH₂)₃ and CH₃O(CH₂CH₂O)₅(CH₂)₃ are preferable.
(6) Further as the organic group X², there are, for example, polymerizable organic groups which may contain oxygen atom, nitrogen atom, fluorine atom, chlorine atom, silicon atom, or the like.

Examples thereof are, for instance, CH₂=C(CH₃)CO₂(CH₂)₃, CH₂=CH, CH₂=CHCH₂, CH₂=CHO(CH₂)₃, CH₂=CHOCO(CH₂)₃, CH₂=CHC₆H₄, CH₂=CHCO₂(CH₂)₃ and the like. From the viewpoint of polymerizability and availability, CH₂=C(CH₃)CO₂(CH₂)₃ and CH₂=CHO(CH₂)₃ are preferable.

In the present invention, polymers or copolymers which have a molecular weight of 2,000 to 200,000, preferably 5,000 to 20,000 and are prepared by polymerizing or copolymerizing the compounds represented by the formula (2) which have the polymerizable organic group as mentioned above, are also preferable.

The above R¹⁵ are the same or different, and each may contain oxygen atom, nitrogen atom, fluorine atom and/or chlorine atom and is hydrogen atom, a siloxane residue or a monovalent organic group having 1 to 1,000 carbon atoms from the viewpoint of surface concentrating property, hydrolyzability and releasing property. The number of carbon atoms is preferably 4 to 100, more preferably 4 to 20. However at least one R¹⁵ must have 4 or more carbon atoms and have carbon atoms more than any of R¹ of Compound 1.

As the R¹⁵, there are the same ones as R¹. However it is necessary that at least one of R¹⁵ is the organic group as mentioned below which has 4 or more carbon atoms. Examples of the preferred monovalent organic group having 4 or more carbon atoms are, for instance, H(CH₂)ₚ, (CH₃)₂CH, H(CH₂)ₚC=O, F(CF₂)_{q}(CH₂)ₚ, (CF₃)₂CH, H(CF₂)_{q}(CH₂)ₚ, F(CF₂)_{q}(CH₂)ₚC=O, H(CF₂)_{q}(CH₂)ₚC=O, (F(CF₂)_{q}(CH₂)ₚ)₂N, ((CF₃)₂CH)₂N, (H(CF₂)_{q}(CH₂)ₚ)₂N, F(CF₂)_{q}O(CF(CF₃)CF₂O)ₚCF(CF₃)C=O, (F(CF₂)_{q}(CH₂)ₚ)₂C=N, ((CF₃)₂CH)₂C=N, (H(CF₂)_{q}(CH₂)ₚ)₂C=N, F(CF₂)_{q}(CH₂)ₚC=ONR³, H(CF₂)_{q}(CH₂)ₚC=ONR³, F(CF₂)_{q}(CH₂)ₚC=CH₂, H(CF₂)_{q}(CH₂)ₚC=CH₂, F(CF₂)_{q}(CH₂)ₚC=CF₂ and H(CF₂)_{q}(CH₂)ₚC=CF₂, wherein p is 0 or an integer of 1 to 6, q is an integer of 1 to 10, R³ is alkyl which has 1 to 6 carbon atoms and may be linear or branched, the total number of carbon atoms in the organic group is not less than 4.

Examples of those organic groups having 4 or more carbon atoms are, for instance, CF₃(CF₂)₂CH₂, CF₃ (CF₂)₃CH₂CH₂, CF₃(CF₂)₇CH₂CH₂, CF₃(CF₂)₉CH₂CH₂, H(CF₂)₃CH₂, H(CF₂)₄CH₂, CF₃(CF₂)₆C=O, CF₃(CF₂)₇C=O, and the like. From the viewpoint of defoaming property, surface concentrating property, hydrolyzability and releasing property, CF₃(CF₂)₃CH₂CH₂, CF₃(CF₂)₅CH₂CH₂, CF₃(CF₂)₇CH₂CH₂ and CF₃(CF₂)₉CH₂CH₂ are preferred.

Among the above R¹⁵, examples of the siloxane residue are, for instance, (Si(OR¹⁵)₂O)ₙR¹⁵, in which R¹⁵ is the same as the monovalent organic group among the above-mentioned R¹⁵, and the like.

The above R¹⁶ may be the same or different and are organic groups which have a chelating ability and may contain fluorine atom and/or chlorine atom. It is preferable that R¹⁶ is an organic group having the number of carbon atoms of 4 to 20, preferably 4 to 10 from the viewpoint of surface concentrating property, hydrolyzability and releasing property.

In the present invention, since the organometallic compound, in which an organic group having such a chelating ability is bonded, is used, there can be obtained effects of excellent storage stability, reactivity, solubility and compatibility.

Examples of the preferred compound giving an organic group having the chelating ability as mentioned above are, for instance, β-diketones such as 2,4-pentanedione and 2,4-heptanedione; keto esters such as methyl acetoacetate, ethyl acetoacetate and butyl acetoacetate; hydroxycarboxylic acids such as lactic acid, methyl lactate, ethyl lactate, ammonium lactate, salicylic acid, methyl salicylate, ethyl salicylate, malic acid, ethyl malate, tartaric acid, ethyl tartrate, an ester and a salt thereof; keto-alcohols such as 4-hydroxy-4-methyl-2-pentanone, 4-hydroxy-2-pentanone, 4-hydroxy-2-heptanone and 4-hydroxy-4-methyl-2-heptanone; amino-alcohols such as monoethanolamine, diethanolamine, triethanolamine, N-methylmonoethanolamine, N-ethylmonoethanolamine, N,N-dimethylethanolamine and N,N-diethylethanolamine; active hydrogen compounds with enolic form such as diethyl malonate, methylolmelamine, methylolurea and methylolacrylamide; and the like. From the viewpoint of surface concentrating property and stability, more preferable are β-diketones, keto esters and compounds which are obtained by substituting a part or the whole of hydrogen atoms of the above-mentioned compounds by fluorine atom and/of or chlorine atom.

Examples of the above-mentioned metal atom M² are, for instance, B, Al, Ga, In, Tl, Sc, Y, La, Ac, Si, Ge, Sn, Pb, Ti, Zr, Hf, As, Sb, Bi, V, Nb, Ta, Te, Po, Cr, Mo, W, At, Mn, Tc, Re, Fe, Co, Ni, Ru, Rh, Pd, Os, Ir, Pt and the like. From the viewpoint of synthesis and availability, Al, Ti, B, Zr or Si is preferable.

As the Compound 2 represented by the formula (2), there are, for example, the following compounds.

In case where e is zero in the formula (2), there are: 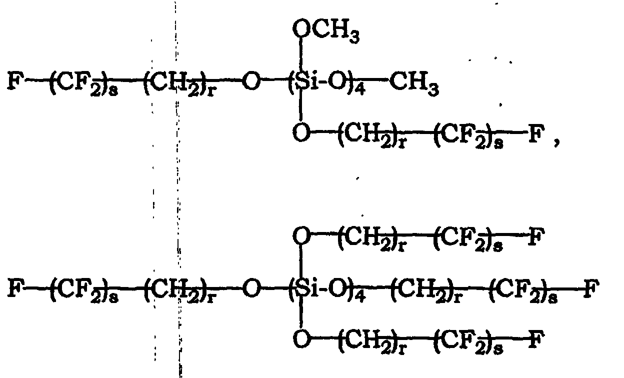 wherein r is an integer of 1 to 6, s is an integer of 1 to 10 provided that at least one of r + s is 4 or more, B(OCH₂CH₂C₈F₁₇)₃, B(OCH₂CH₂C₈F₁₇)₂(OCH₃), B(OCH₂CH₂C₈F₁₇)₂(OH), B(OCOC₈F₁₇)₃, B(OCOC₈F₁₇)₂(OCH₃), Al(OCH₂CH₂C₈F₁₇)₃, Al(OCH₂CH₂C₈F₁₇)₂(OCH₃), Al(OCH₂CH₂C₈F₁₇)₂(OH), Al(OCH₂CH₂C₈F₁₇)₂(OH), Al(OCOC₈F₁₇)₃, Al(OCOC₈F₁₇)₂(OCH₃), Al(CF₃COCHCOCF₃)₃, Al(CF₃COCHCOCF₃)₂(CH₃COCHCOCH₃), Al(CF₃COCHCOOC₂H₅)₃, Al(CF₃COCHCOOC₂H₅)₃, Al(CF₃COCHCOOC₂H₅)₂(CH₃COCHCOCH₃), Al(CF₃COCHCOCF₃)₂(OH), Al(CF₃COCHCOOC₂H₅)₂(OH), Ti(OCH₂CH₂C₈F₁₇)₄, Ti(OCH₂CH₂C₈F₁₇)₂(OCH₃)₂, Ti(OCH₂CH₂C₈F₁₇)₂(OCH(CH₃)₂)₂, Ti(OCH₂CH₂C₈F₁₇)₂(OH)₂, Ti(OCOC₈F₁₇)₄, Ti(OCOC₈F₁₇)₂(OCH₃)₂, Ti(CF₃COCHCOCF₃)₂(OCH(CH₃)₂)₂ and Ti(CF₃COCHCOOC₂H₅)₂(OCH(CH₃)₂)₂.

In case where e is 1 in the formula (2), there are: HSi(OCH₂CH₂C₈F₁₇)₃, HSi(OCH₂CH₂C₈F₁₇)₂(OCH₃), HSi(OCH₂CH₂C₈F₁₇)₂(OH), HSi(OCOC₈F₁₇)₃, HSi(OCOC₈F₁₇)₂(OCH₃), CH₃Si(OCH₂CH₂C₈F₁₇)₃, CH₃Si(OCH₂CH₂C₈F₁₇)₂(OCH₃), CH₃Si(OCH₂CH₂C₈F₁₇)₂(OH), CH₃Si(OCOC₈F₁₇)₃, CH₃Si(OCOC₈F₁₇)₂(OCH₃), H₂N(CH₂)₃Si(OCH₂CH₂C₈F₁₇)₃, H₂N(CH₂)₃Si(OCH₂CH₂C₈F₁₇)₂(OCH₃), H₂N(CH₂)₃Si(OCH₂CH₂C₈F₁₇)₂(OH), H₂N(CH₂)₃Si(OCOC₈F₁₇)₃, H₂N(CH₂)₃Si(OCOC₈F₁₇)₃(OCH₃), OCN(CH₂)₃Si(OCH₂CH₂C₈F₁₇)₃, OCN(CH₂)₃Si(OCH₂CH₂C₈F₁₇)₂(OCH₃), OCN(CH₂)₃Si(OCOC₈F₁₇)₃, OCN(CH₂)₃Si(OCOC₈F₁₇)₂(OCH₃), CH₃O(CH₂CH₂O)_{g}(CH₂)₃Si(OCH₂CH₂C₈F₁₇)₃, CH₃O(CH₂CH₂O)_{g}(CH₂)₃Si(OCH₂CH₂C₈F₁₇)₂(OCH₃), CH₃O(CH₂CH₂O)_{g}(CH₂)₃Si(OCH₂CH₂C₈F₁₇)₂(OH), CH₃O(CH₂CH₂O)_{g}(CH₂)₃Si(OCOC₈F₁₇)₃, CH₃O(CH₂CH₂O)_{g}(CH₂)₃Si(OCOC₈F₁₇)₂(OCH₃), wherein g is an integer of 1 to 100, CH₂=C(CH₃)CO₂(CH₂)₃Si(OCH₂CH₂C₈F₁₇)₃, CH₂=C(CH₃)CO₂(CH₂)₃Si(OCH₂CH₂C₈F₁₇)₂(OCH₃), CH₂=C(CH₃)CO₂(CH₂)₃Si(OCH₂CH₂C₈F₁₇)₂(OH), CH₂=C(CH₃)CO₂(CH₂)₃Si(OCOC₈F₁₇)₃, and CH₂=C(CH₃)CO₂(CH₂)₃Si(OCOC₈F₁₇)₂(OCH₃).

Among the above-mentioned cooligomers, as materials for cooligomers other than those prepared from the organometallic compound of the formula (2), in which e and f are zero at the same time and M² is Si, there are compounds mentioned below. Si(OCH₃)₄, Si(OC₂H₅)₄, Si(OCH₂CF₂CF₃)₄, Si(OCH(CF₃)₂)₄, Si(OCH₂CH₂C₈F₁₇)₄, Si(OCH₂CF₂CF₂H)₄, Si(OCH₂C₄F₈H)₄, Si(OCH₂CF₂CF₃)₂(OCH₃)₂, Si(OCH(CF₃)₂)₂(OCH₃)₂, Si(OCH₂CH₂C₈F₁₇)₂(OCH₃)₂, Si(OCH₂CF₂CF₂H)₂(OCH₃)₂, Si(OCH₂CF₂CH₂H)₂(OC₄H₉)₂, Si(OCH₂CF₂CF₃)₂(OH)₂, Si(OCH(CF₃)₂)₂(OH)₂, Si(OCH₂CH₂C₈F₁₇)₂(OH)₂, Si(OCH₂CF₂CF₂H)₂(ON=CCH₃(C₂H₅))₂, Si(OCOCF₃)₄, Si(OCOC₂F₅)₄, Si(OCOC₈F₁₇)₄, Si(OCOCF₃)₂(OCH₃)₂, Si(OCOC₂F₅)₂(OCH₃)₂, Si(OCOC₈F₁₇)₂(OCH₃)₂, Si(OCH₂CF₂CF₃)₃(OCH₂CH₂)ₕOCH₃, Si(OCH(CF₃)₂)₃(OCH₂CH₂)ₕOCH₃, Si(OCH₂CH₂C₈F₁₇)₃(OCH₂CH₂)ₕOCH₃, Si(OCH₂CF₂CF₃)₂(OCH₃)(OCH₂CH₂)ₕOCH₃, Si(OCH(CF₃)₂)₂(OCH₃)(OCH₂CH₂)ₕOCH₃, Si(OCH₂CH₂C₈F₁₇)₂(OCH₃)(OCH₂CH₂)ₕOCH₃, Si(OCH₂CF₂CF₃)₂(OH)(OCH₂CH₂)ₕOCH₃, Si(OCH(CF₃)₂)₂(OH)(OCH₂CH₂)ₕOCH₃, Si(OCH₂CH₂C₈F₁₇)₂(OH)(OCH₂CH₂)ₕOCH₃, Si(OCOCF₃)₃(OCH₂CH₂)ₕOCH₃, Si(OCOC₂F₅)₃(OCH₂CH₂)ₕOCH₃, Si(OCOC₈F₁₇)₃(OCH₂CH₂)ₕOCH₃, Si(OCOCF₃)₂(OCH₃)(OCH₂CH₂)ₕOCH₃, Si(OCOC₂F₅)₂(OCH₃)(OCH₂CH₂)ₕOCH₃, Si(OCOCC₈F₁₇)₂(OCH₃) (OCH₂CH₂)ₕOCH₃, Si(OCH₃)₄, Si(OC₂H₅)₄, Si(OC₄H₉)₄ and Si(ON=CCH₃(C₂H₅))₄, wherein h is an integer of 1 to 100.

Examples of the oligomer or cooligomer of the present invention are linear, branched, cyclic and three-dimensional oligomers or cooligomers.

In the present invention, the degree of polymerization of the oligomer or cooligomer is preferably from 2 to 100, more preferably from 4 to 20. When the degree of polymerization is smaller, a boiling point of the oligomer or cooligomer is easily lowered, and the oligomer or cooligomer is easily vaporized at coating and is difficult to be incorporated into a coating film. Also a defoaming property is lowered. When the degree of polymerization exceeds 100, there is a tendency that control of the degree of polymerization at synthesis is difficult, a viscosity of the oligomer or cooligomer easily becomes high and workability becomes inferior. When in the formula (2), d is 4, e and f are zero, M² is Si and fluorine atom is contained, it is preferable that the degree of polymerization of the oligomer or cooligomer is from 2 to 40 from the viewpoint of appearance, anti-sagging property and alkali resistance of a coating film. There are, for instance, oligomers or cooligomers such as: 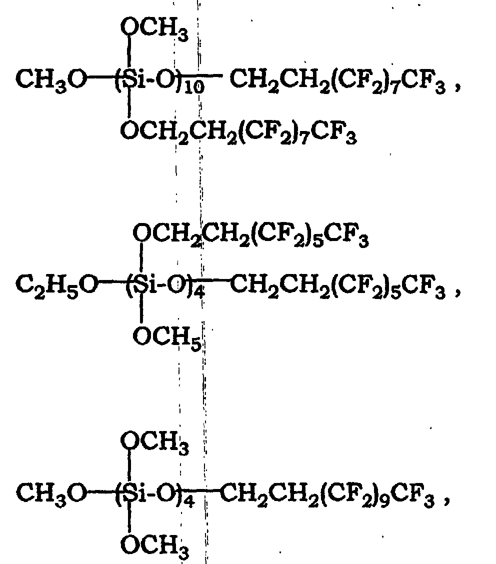 and the like.

Compound 2 represented by the formula (2) can be prepared through the same process as in Compound 1.

Further in the present invention, it is particularly preferable that the above-mentioned organometallic compound is an oligomer or cooligomer (Compound 3) obtained from trifunctional siloxane represented by the formula R¹-Si(O-R²)₃ and/or tetrafunctional siloxane represented by the formula Si(O-R³)₄, wherein R¹, R² and R³ are the same or different and are alkyl having 1 to 4 carbon atoms.

In case of the cooligomer, it is preferable that a polymerization ratio (mole ratio) of trifunctional siloxane to tetrafunctional siloxane is 0.1/5 to 5/1, particularly 0.5/5 to 3/5 from the viewpoint of physical properties such as compression-bonding property and stain-proofing property.

Examples of Compound 3 are, for instance, a cooligomer comprising methyltrimethoxysilane and tetramethoxysilane, and the like.

When the above-mentioned Compound 1 is used as the organometallic compound, a proportion of Compound 1 is 0.1 to 100 parts by weight, preferably 1 to 50 parts by weight on the basis of 100 parts by weight of thermoplastic resin. When less than 0.1 part by weight, stain-proofing property tends to be lowered, and when more than 100 parts by weight, there is a tendency that appearance of a coating film becomes poor and compatibility with the resin is lowered.

With respect to a mixing amount of Compound 2 and thermoplastic resin, it is preferable that an amount of Compound 2 is 0.01 to 5 parts by weight, more preferably 0.1 to 2 parts by weight on the basis of 100 parts by weight of thermoplastic resin. When less than 0.01 part by weight, defoaming property tends to be lowered, and when more than 5 parts by weight, there is a tendency that hydrophilic property is lowered and cissing easily arises on a coating film.

Further with respect to a mixing amount of Compound 3 and thermoplastic resin, an amount of Compound 3 may be 0.1 to 100 parts by weight on the basis of 100 parts by weight of thermoplastic resin from the viewpoint of exhibiting hydrophilic property, and is particularly preferably 1 to 50 parts by weight from the viewpoint of leveling property at coating.

Compounds 1 to 3 can be used solely or optionally mixed. It is preferable that at least Compound 1 or 3 is used. Also since Compound 2 has a defoaming ability, it is preferable to use Compound 2 in combination with Compound 1 and/or 3. In case of the combination use, a mixing ratio thereof is optionally selected so that respective amounts of Compounds 1 to 3 are in the ranges mentioned above.

The hydrophilic colloid compound to be used in the present invention may comprise silica sol obtained by dispersing and stabilizing silica in an organic solvent or water.

Silica has, on its particle surface, a hydrophilic group such as -SiOH or -SiOR, in which R is alkyl having at least one carbon atom.

Examples of the above-mentioned R are, for instance, methyl, ethyl, propyl, butyl, and the like. An upper limit of the number of carbon atoms may be about 6 from a point of exhibiting hydrophilic property. Particularly preferred are methyl and ethyl.

An average particle size of the above-mentioned silica may be 10 to 200 nm from the viewpoint of dispersion stability in the thermoplastic resin composition, preferably 10 to 100 nm from a point of maintaining smoothness and gloss of a finished surface after coating of the composition.

A specific gravity of the above-mentioned silica may be 0.90 to 1.5 g/cm³ similarly from the viewpoint of dispersion stability in the resin composition.

A solvent is not particularly limited as far as a silica is dispersed therein to form a sol. Examples thereof are, for instance, ketones such as methyl isobutyl ketone (MIBK) and methyl ethyl ketone (MEK); esters such as ethyl acetate and butyl acetate; aromatic solvents such as toluene and xylene; alcohols such as ethylene glycol, isopropanol, ethanol and methanol; monoethers such as methyl cellosolve and methyl carbitol; water; and the like.

Among them, it is preferable to use ketones, esters and water from the viewpoint of affinity with the thermoplastic resin and stability at mixing.

The above-mentioned silica sol can be prepared by mixing the above-mentioned silica and solvent through usual method.

A viscosity of the obtained silica sol may be 1 to 200 mPa/s from the viewpoint of workability, namely easiness of measurement and handling thereof. It is preferable that the viscosity is 1 to 50 mPa/s from the viewpoint of easiness in dispersing after mixing to the thermoplastic resin.

Examples of the silica sol which can be used in the present invention and is commercially available are, for instance, solvent type silica sols such as MIBK-ST, XBA-ST, NPC-ST, EG-ST-ZL, IPA-ST, MEK-ST, EG-ST-ZL and EG-ST and aqueous silica sols such as SNOWTEX ST-20, ST-30, ST-40, ST-C, ST-N, ST-O, ST-S, ST-50, ST-20L, ST-XS, ST-XL, ST-YL, ST-ZL, QAS-40, LSS-35, LSS-45, ST-UP, ST-OUP and ST-AK which are available from Nissan Chemical Industries, Ltd.

In the present invention, when the hydrophilic colloid compound is used as a hydrophilic compound, a mixing amount thereof may be 0.1 to 100 parts by weight on the basis of 100 parts by weight of the thermoplastic resin from the point of exhibiting hydrophilic property, preferably 5 to 50 parts by weight from the viewpoint of leveling property after coating.

To the composition to be used in the present invention can be mixed an organic solvent. Examples of the preferred organic solvent are, for instance, ketones such as acetone, methyl ethyl ketone, methyl isobutyl ketone and cyclohexanone; and acetic esters such as ethyl acetate and butyl acetate. In addition, there are preferred organic solvents such as cellosolves, carbitols, aliphatic hydrocarbons, aromatic hydrocarbons such as toluene and xylene, alcohols and chlorine-based solvent.

Organic solvents to be used, for example, when coating on a substrate of plastics such as polycarbonate, are, for instance, ketone solvents having 3 to 6 carbon, atoms, for example, acetone, methyl ethyl ketone, diethyl ketone, mehtyl-n-propyl ketone, methyl isopropyl ketone, cyclobutanone, cyclopentanone, methyl isobutyl ketone, and the like. Particularly preferred are methyl isobutyl ketone and methyl ethyl ketone. When the ketone. solvent having 3 to 6 carbon atoms is used in an amount of not less than 10 % by weight on the basis of the whole solvents, a surface of a substrate is slightly dissolved and thus adhesion can be imparted. Further other organic solvent can be used together. Examples thereof are, for instance, ketone solvents such as methyl-n-butyl ketone, ethyl-n-butyl ketone, methyl-n-amyl ketone, diisobutyl ketone, methyl-n-hexyl ketone, mesityl oxide, cyclohexane, diacetone alcohol, methylphenol ketone and isophorone; ester solvents such as ethyl acetate, n-propyl acetate, n-butyl acetate, isobutyl acetate, 2-methoxyethyl acetate, amyl acetate, dimethyl adipate, dimethyl glutarate and dimethyl succinate; ether solvents such as methyl cellosolve, 2-methoxy-2-propanol cellosolve, 1-ethoxy-2-propanolbutyl cello solve, 1,4-dioxane, propylene glycol methyl ether and propylene glycol methyl ether acetate; and the like.

A proportion of the solvent to be used in the resin composition of the present invention is usually 95 to 40 % by weight, preferably 85 to 50 % by weight. In that case, a solid content of the above-mentioned resin component is 5 to 60 % by weight, preferably 15 to 50 % by weight. When more than 60 % by weight, a viscosity of the composition becomes too high, which impairs workability.

Also to the resin composition of the present invention can be blended, as case demands, additives such as thermal stabilizer, anti-oxidant, lubricant, ultraviolet ray absorber, light stabilizer, flatting agent, dye, defoaming agent, dispersing agent and color pigment. Among them, it is desirable to blend an ultraviolet ray absorber and light stabilizer.

Examples of the ultraviolet ray absorber are, for instance, benzophenone, benzotriazole, diphenyl acrylonitrile derivative (2,2-dihydroxy-4-methoxybenzophenone, ethyl-2-cyano-3,3-diphenylacrylate, 2-hydroxy-4-n-octoxybenzophenone, etc.), high molecular ultraviolet ray absorber ([2-hydroxy-4-(methacryloyloxyethoxy) benzophenone]/methyl methacrylate copolymer, etc.), and the like. Among them, those containing methyl methacrylate in an amount of not less than 50 % by weight are preferred. It is preferable that those ultraviolet ray absorbers are contained in the resin composition of the present invention in an amount of about 1 part by weight to about 12 parts by weight on the basis of 100 parts by weight of resin component.

Examples of the above-mentioned light stabilizer are, for instance, nickeldibutyldithiocarbamate, nickelbis(octylphenyl) sulfide, [2,2'-thiobis(4-tert-octylphenolate)]-n-butylaminenickel, nickel complex-3,5-di-tert-butyl-4-hydroxybenzylphosphoromonoethylate, hindered amine light stabilizers (bis(2,2,6,6-tetramethyl-4-piperidyl)sebacate, bis(1,2,2,6,6-pentamethyl-4-piperidyl)sebacate, 2-(3,5-di-t-butyl-4-hydroxybenzyl)-2-n-buytlmalonatebis(1,2,2,6,6-pentamethyl-4-piperidyl), and the like. It is preferable that those light stabilizers are contained in the resin composition of the present invention in an amount of about 0.1 part by weight to about 10 parts by weight on the basis of 100 parts by weight of resin component.

It is' preferable that the color pigment is contained in the resin composition of the present invention in an amount of 2 to 100, parts by weight on the basis of 100 parts by weight of resin component.

Example of other additives are, for instance, silicone oil, silicone oligomer, fluorine-containing oil, thickener, antifungal agent, coupling agent, filler, and the like.

Among the above-mentioned additives, with respect to the additives, an adding amount of which is not mentioned, it is preferable that an amount thereof is 0.05 to 5 parts by weight on the basis of 100 parts by weight of resin component in the resin composition of the present invention.

The resin composition to be used in the present invention is prepared through usual method. For example, there is a method of mixing the above-mentioned vinylidene fluoride copolymer, acrylic polymer, hydrophilic compound, solvent and as case demands, additives in the above-mentioned mixing amount.

Then the substrate of the construction material for interior and exterior use of the present invention is explained below.

At first a form of the substrate may be, for example, sheet (including mesh sheet), mat, film (including a coating film), plate, woven fabric, non-woven fabric, fiber and a desired final form of the construction material for interior and exterior use.

As mentioned in the opening sentences, the construction materials of the present invention are used for interior and exterior materials which are required to have good appearance and long-term durability. In the present invention, examples of a substrate of the construction materials are, for instance, thermoplastic resins such as soft and hard polyvinyl chloride, ABS resin, polyester, polycarbonate and polyamide (nylon), thermosetting resins such as urethane resin, epoxy resin, phenol resin and melamine resin, metals such as iron (including gad vanized iron sheet, tin plate, etc.), aluminum, stainless steel and titanium, glass, carbon, paper, slate, and the like.

The substrate may be a composite substrate comprising a plurality of the above-mentioned materials such as a steel sheet obtained by laminating a polyvinyl chloride sheet or film on a galvanized sheet iron or the like, a sheet obtained by applying polyvinyl chloride resin to polyester fiber and a glass fiber coated with thermoplastic resin.

Mentioned below are examples of preferred combinations of a form and material of a substrate and preferred applications of the construction materials of the present invention comprising such a substrate.

### (Application 1)

Form of substrate: Sheet
Material of substrate : Thermoplastic resin
Application of construction material having the substrate: Interior and exterior materials

### (Application 2)

Form of substrate: Sheet
Material of substrate: Polyvinyl chloride
Application of construction material having the substrate: Tent house, roof water-proof sheet, warehouse

### (Application 3)

Form of substrate: Mesh sheet
Material of substrate: Substrate having a polyvinyl chloride layer on its surface (core material: polyester)
Application of construction material having the substrate: Protection net for building, artificial screen, roll blind

### (Application 4)

Form of substrate: Sheet, film
Material of substrate: Polyvinyl chloride
Application of construction material having the substrate: Marking film, vinyl house for agriculture, wall paper, carpet

### (Application 5)

Form of substrate: Sheet, plate
Material of substrate: Polycarbonate
Application of construction material having the substrate: Carport for domestic use, side wall of highway

### (Application 6)

Form of substrate: Sheet, plate
Material of substrate: Slate
Application of construction material having the substrate: Side wall of house, roof

### (Application 7)

Form of substrate: Sheet, plate
Material of substrate: Galvanized iron sheet, tin plate
Application of construction material having the substrate: Prefabricated warehouse, roof of house, wall, advertising board

### (Application 8)

Form of substrate: Plate, desired final form of product
Material of substrate: Urethane resin, ABS resin
Application of construction material having the substrate: Cover for ventilation fan, cushion for car, advertising board

### (Application 9)

Form of substrate: Desired final form of product
Material of substrate: Carbon fiber, titanium fiber
Application of construction material having the substrate: Fishing rod, tennis: racket, golf club

Then mentioned below is a method for coating the above-mentioned resin composition to a substrate.

In the present invention the resin composition can be coated to a substrate by methods having been employed widely such as a method of coating with a brush or roller, a method of spraying by means of air-spraying, airless spraying or aerosol, a dipping method, a roll coating method, an ink coating method and gravure coating method.

After the coating, either of drying at normal temperature or drying by heating is carried out to make a film. From the viewpoint of stability of surface physical properties and appearance, drying is carried out preferably with a general purpose electric dryer or the like at a temperature of about 50°C to about 200°C.

A thickness of a coating film so-formed on a substrate may be from 1 to 100 µm, preferably 1 to 30 µm from the viewpoint of appearance and workability at coating.

In the construction materials of the present invention, prior to coating of the resin composition to a substrate, primer coating or intermediate coating may be carried out. Those primer coating and intermediate coating may not be carried out, but is preferably carried out from the viewpoint, of enhancement of adhesion to the substrate and appearance of a finished product and an increase in a total coating thickness.

Examples of preferred primer and intermediate coatings are coatings prepared by kneading a usually used color pigment, extender pigment, antisettling agent, dispersing agent, curing agent, curing accelerator, diluting agent, solvent and the like with at least one synthetic resin selected from epoxy resin (including a tar-modified or urethane-modified resin), vinyl resin (including tar-modified resin and acrylic resin), chlorinated rubber, polyurethane resin and phenol resin.

A coating method may be the same as that explained with respect to the resin composition of the present invention. A coating thickness obtained by primer coating and intermediate coating is not limited particularly. The coating thickness thereof may be from about 1 µm to about 100 µm, respectively.

The so-obtained construction materials for interior and exterior use of the present invention can be used depending on, for example, form and material thereof, for a prefabricated warehouse, tent house, wall paper, carpet, ventilation fan, screen, roll blind, sheets for agriculture, curing, tunnel, building and protection of car, marking filth, artificial mat, geo-membrane, advertising board, storeroom, roofing and side wall of house, roof water-proof sheet, ventilation fan cover, cushion, fishing rod, tennis racket, and the like.

Then the present invention is explained in detail by means of examples, but is not limited to them.

### PREPARATION EXAMPLES 1 to 50

The following resins were used as the thermoplastic resin. Vinylidene fluoride polymer A: ZEFFLE LC-700 available from DAIKIN INDUSTRIES, LTD., VDF/TFE/CTFE=75/14/11 (mole ratio) Vinylidene fluoride polymer B: KYNAR ADS available from Elf Atochem North America Inc., VDF/TFE/HFP=75/20/5 (mole ratio) Acrylic polymer a: Mixture of DIANAL BR-73 (Tg: 100°C, weight average molecular weight: 80,000) and DIANAL BR-85 (Tg: 105°C, weight average molecular weight: about 260,000) available from Mitsubishi Rayon Co., Ltd. and having a content of methyl methacrylate of not less than 90 % by mole and a weight average molecular weight of about 100,000 Acrylic polymer b: DIANAL BR-83 (Tg: 105°C, weight average molecular weight: 40,000, content of methyl methacrylate: not less than 90 % by mole) available from Mitsubishi Rayon Co., Ltd.

The following compounds were used as the hydrophilic compound.
Hydrophilic compound 1: Cooligomer of methyltriethoxysilane and tetramethoxysilane (condensation degree: 20, mole ratio: 1/5)
Hydrophilic compound 2: Cooligomer of methyltriethoxysilane and tetramethoxysilane (condensation degree: 10, mole ratio: 1/5)
Hydrophilic compound 3: Oligomer of tetraethoxysilane (condensation degree: 5)
Hydrophilic compound 4: Cooligomer of methyltripropoxysilane and tetra-n-propoxysilane (condensation degree: 10, mole ratio: 1/5)
Hydrophilic compound 5: MEK-ST available from Nissan Chemical Industries, Ltd. (Organosilica sol, silica sol dispersable in methyl ethyl ketone, particle size: 10 to 20 nm, viscosity: not more than 5 mPa/s, specific gravity: 0.98 to 1.02)
Hydrophilic compound 6: Mixture of hydrophilic compounds 1 and 5 (weight ratio of a solid content in hydrophilic compound 5 to hydrophilic compound 1: 10/3)
Hydrophilic compound 7: SNOWTEX 20 available from Nissan Chemical Industries, Ltd. (Silica sol dispersable in water, particle size: 10 to 20 nm, viscosity: 3 mPa/s, specific gravity: 1.13)
Hydrophilic compound 8: SNOWTEX C available from Nissan Chemical Industries, Ltd. (Silica sol dispersable in water, particle size: 10 to 20 nm, viscosity: 10 mPa/s, specific gravity: 1.13)

### EXAMPLES 1 to 50

A vinylidene fluoride polymer and acrylic polymer were mixed in a mixing ratio shown in Tables 1 and 2 and dissolved in a solvent mixture of ethyl acetate/toluene (weight ratio: 6/4) to give a resin mixture having a solid content of 36 % by weight.

Then the obtained resin mixture was diluted with a solvent mixture of MEK/butyl acetate/toluene to a concentration of 15 % by weight. After that, an ultraviolet ray absorber SUMISORB 130 available from Sumitomo Chemical Company, Ltd. was added to the mixture in an amount corresponding to 10 % by weight of a solid content of the resin.

Finally a hydrophilic compound was added in an amount shown in Tables 1 and 2 to give Resin Compositions 1 to 50 of the present invention.

The so-obtained resin compositions were applied to a soft vinyl chloride plate (available from Nippon Test Panel Kogyo Kabushiki Kaisba, dimensions: 300 mm × 300 mm × 2 mm) by brush coating and allowed to stand for one minute for air-drying, followed by drying in a hot air circulation type dryer at 150°C for five minutes to give construction materials of the present invention. A thickness of the obtained coating film was about 15 µm.

Then the obtained construction materials were cut to give samples having a size of 70 mm × 150 mm × 2 mm. The following tests were carried out to determine physical properties.

### ① Stain-proofing property 1

The samples were allowed to stand outdoor for six-month exposure being inclined by 30 degrees and being faced toward southern direction, and then a degree of staining was evaluated under the following criteria.
- A:: There is neither staining nor stains marked due to rain fall in the form of spot or line.
- B:: There is slightly staining or stains marked due to rain fall locally on the sample.
- C:: There is slightly staining or stains marked due to rain fall all over the surface of the sample.
- D:: There is apparently staining or stains marked due to rain fall all over the surface of the sample.
- E:: There is significantly staining or stains marked due to rain fall to the extent that appearance and color before exposure cannot be recognized.

### ② Stain-proofing property 2

The samples were set on a ceiling of a room for six months, and staining mainly due to nicotine of tobacco was evaluated with naked eyes under the following criteria.
- A:: Almost no yellowing and blackening were found.
- B:: Yellowing and blackening were slightly found.
- C:: Yellowing and blackening were apparently found all over the surface of the samples.
- D:: Significantly yellowing and blackening were found.

### ③ Stain removing property

Carbon black MA-100 available from Mitsubishi Gas Chemical Company, Inc. was previously dispersed in water in a concentration of 8 % by weight and spray-coated to each sample. Then the samples were allowed to stand at 50°C for three hours in a hot air circulation type electric dryer to forcedly make to adhere carbon black to the samples. After restored to room temperature, the sample was washed with flowing water, and then a degree of remaining carbon was evaluated with naked eyes under the following criteria.
- A:: Staining is nearly removed.
- B:: There is slightly staining which can be seen apparently with naked eyes.
- C:: There is staining clearly throughout a surface of the sample.
- D:: Almost no staining can be removed.

### ④ Hardness of coating film

Marking was made with a pencil on a surface of the sample according to the method mentioned in JIS K 5400 and erased with a rubber eraser. A limit where no marking remains was evaluated with a hardness of the pencil.

### ⑤ Accelerated weather resistance 1 and 2

The samples were tested with two kinds of tester, namely SWOM (accelerated weather resistance tester available from Suga Shikenki Kabushiki Kaisha: testing time 2,000 hours) and SUV (weather resistance tester available from Iwasaki Electric Co., Ltd.: testing time 500 hours). A change of a surface of the sample was observed with naked eyes and with a microscope (15 magnifications) and evaluated under the following criteria. The results of the two tester were assumed to be accelerated weather resistance 1 and 2, respectively.
A: There is no abnormality on appearance (gloss, cracking, peeling, yellowing).
B: There is no problem when observed with naked eyes, but there are slightly roughening and yellowing when observed through a microscope.
C: Even with naked eyes, there are slightly roughening, yellowing and blistering at an interface with a substrate.
D: Roughening, yellowing and local blistering are recognized clearly.
E: There are significant cracking and yellowing throughout a surface of the sample.

### ⑥ Post-adhesiveness

Two same samples were laminated and pressed with a heat-press machine (portable heat-press machine FI-600-05 available from Fuji Impulse Co., Ltd.) under the condition of pressing width of 5 mm. The obtained heat-pressed sample was subjected to peeling test with a tension tester available from Orientec Corporation (TENSILON UCT-500) under the conditions of a test speed of 50 mm/min and a full scale of 10 kg. A state of peeling of the heat-pressed part was evaluated with naked eyes under the following criteria. Also a peel strength was determined for comparison.
A: The fused poly(vinyl chloride) layer was broken (No interface peeling arises).
B: The laminated two samples are separated at interface thereof.

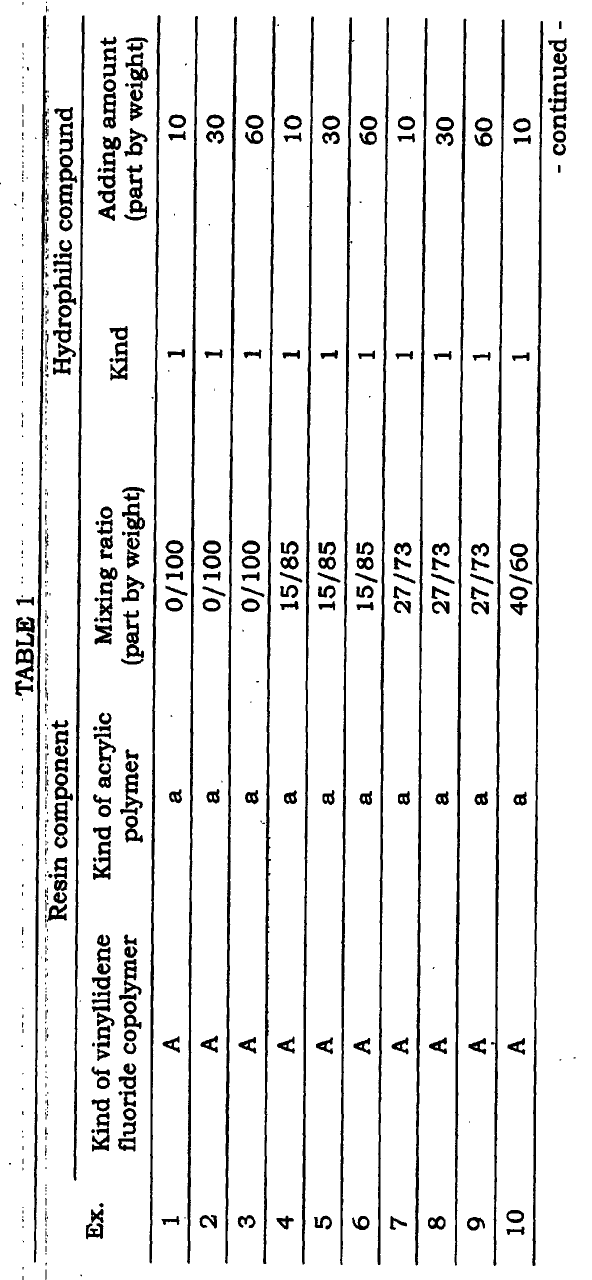

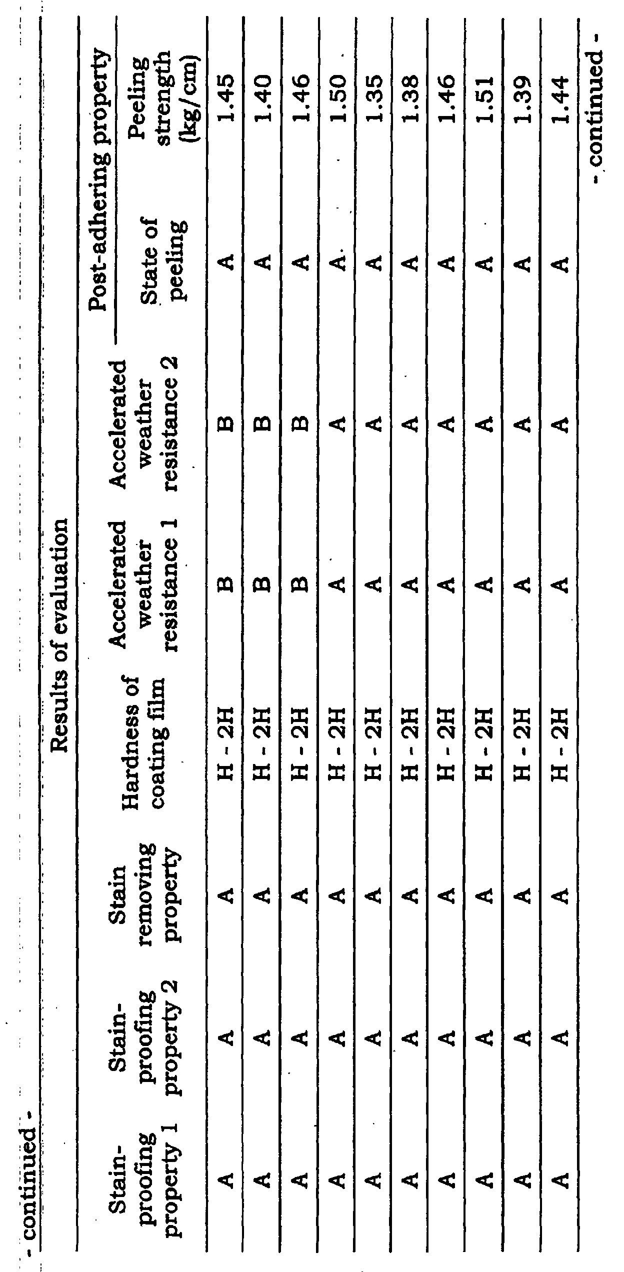

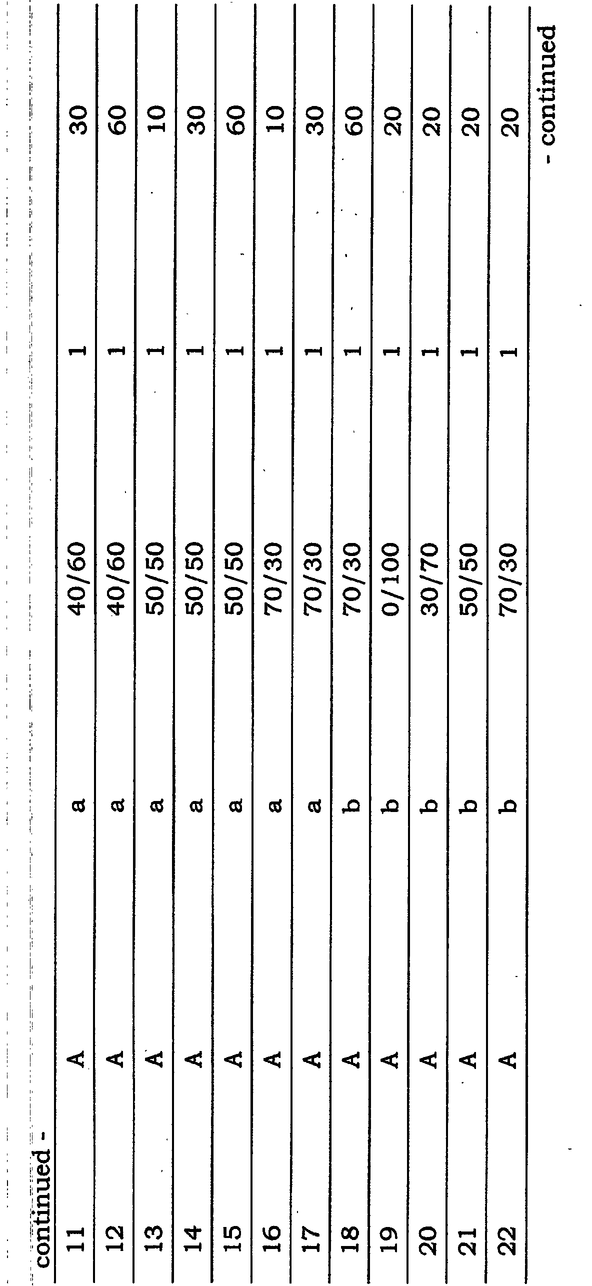

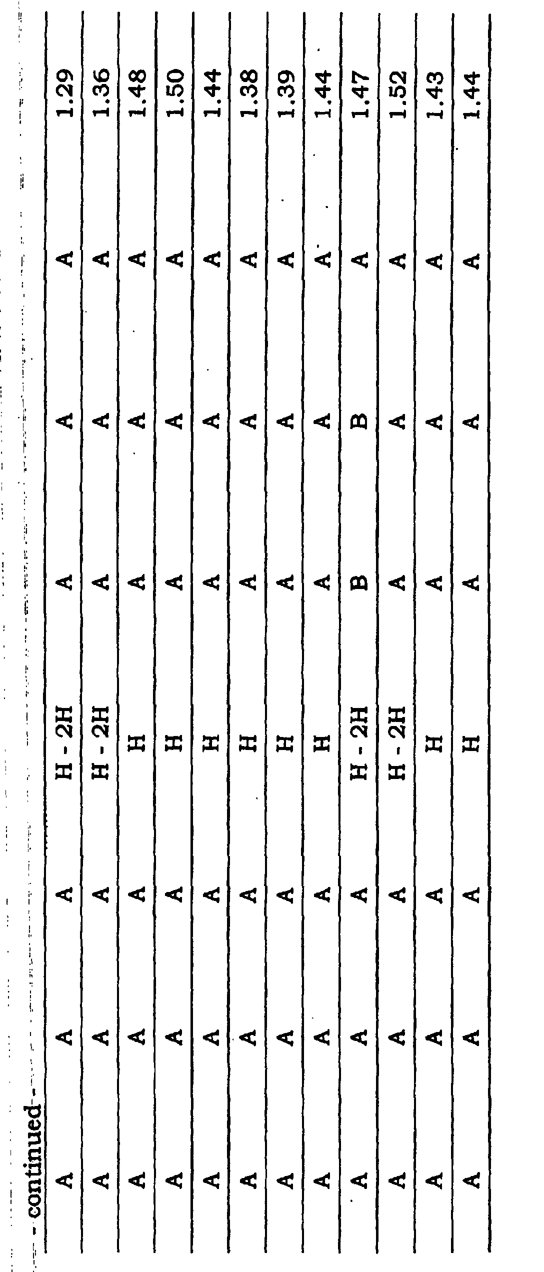

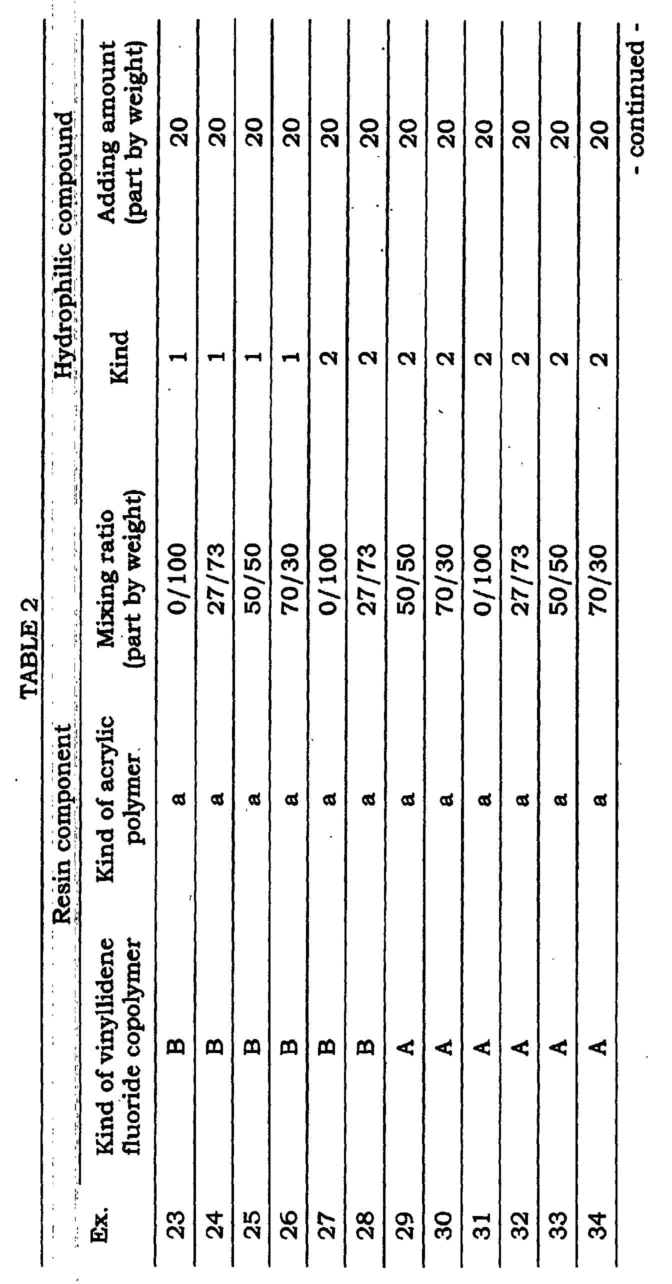

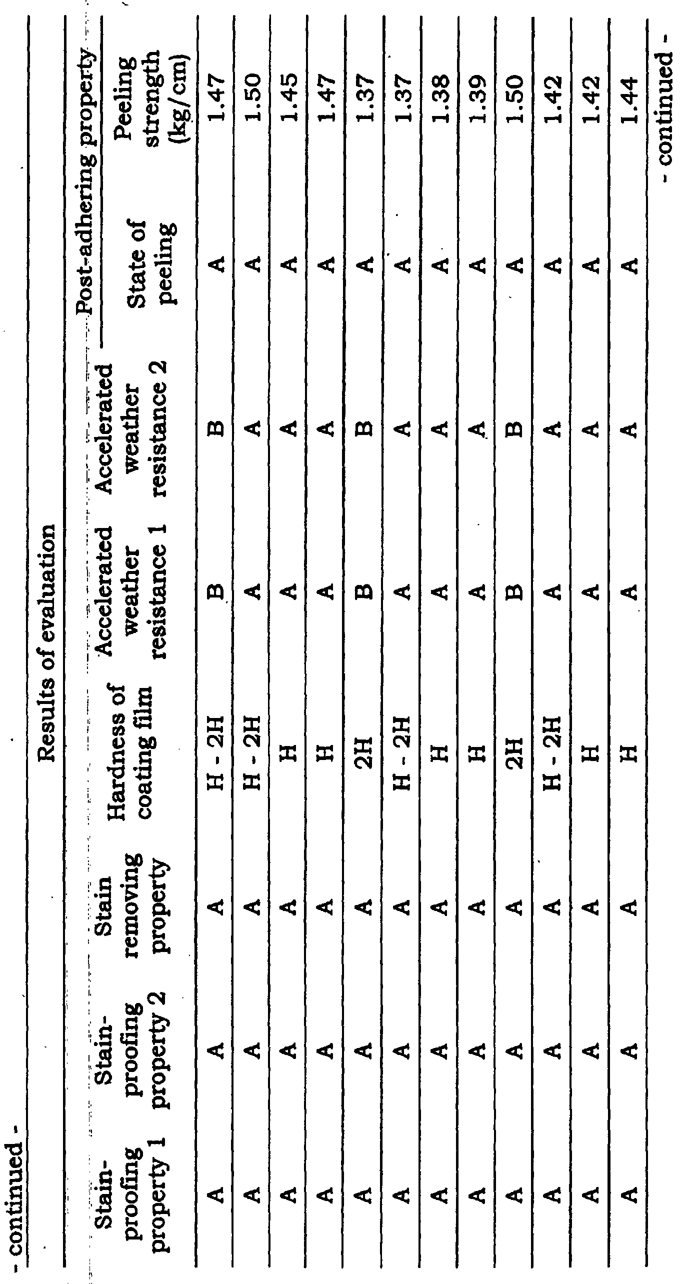

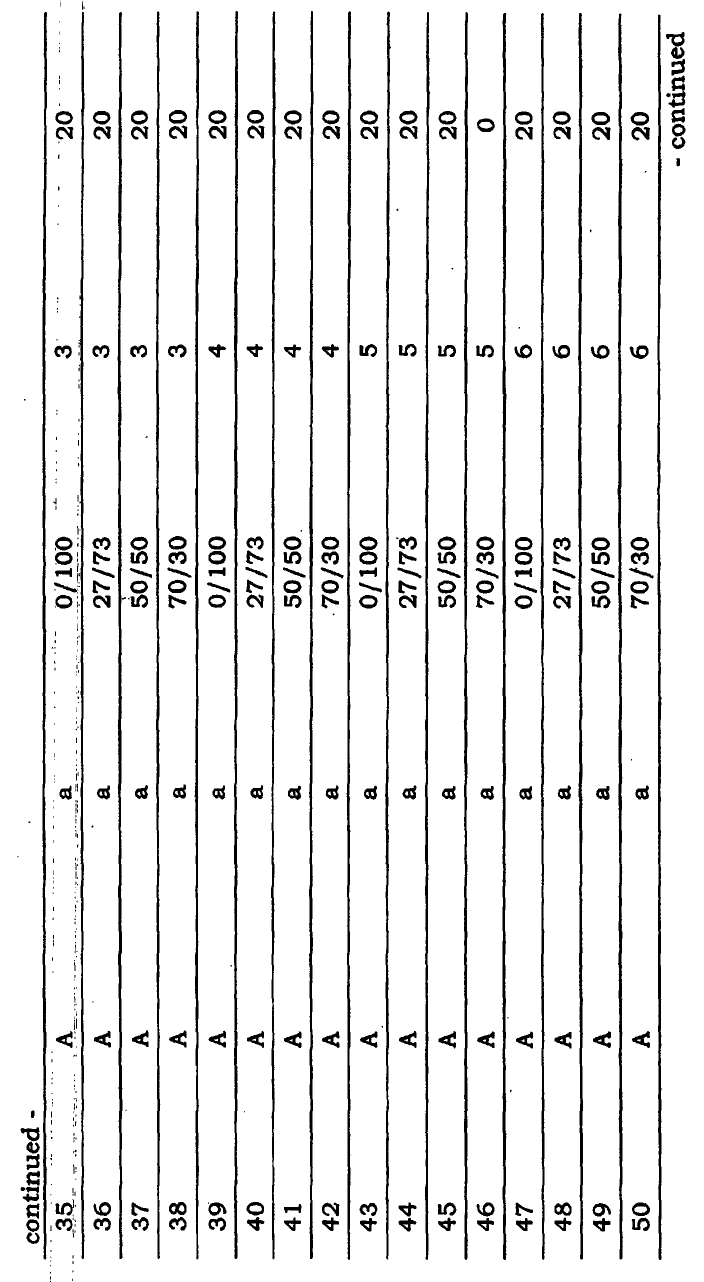

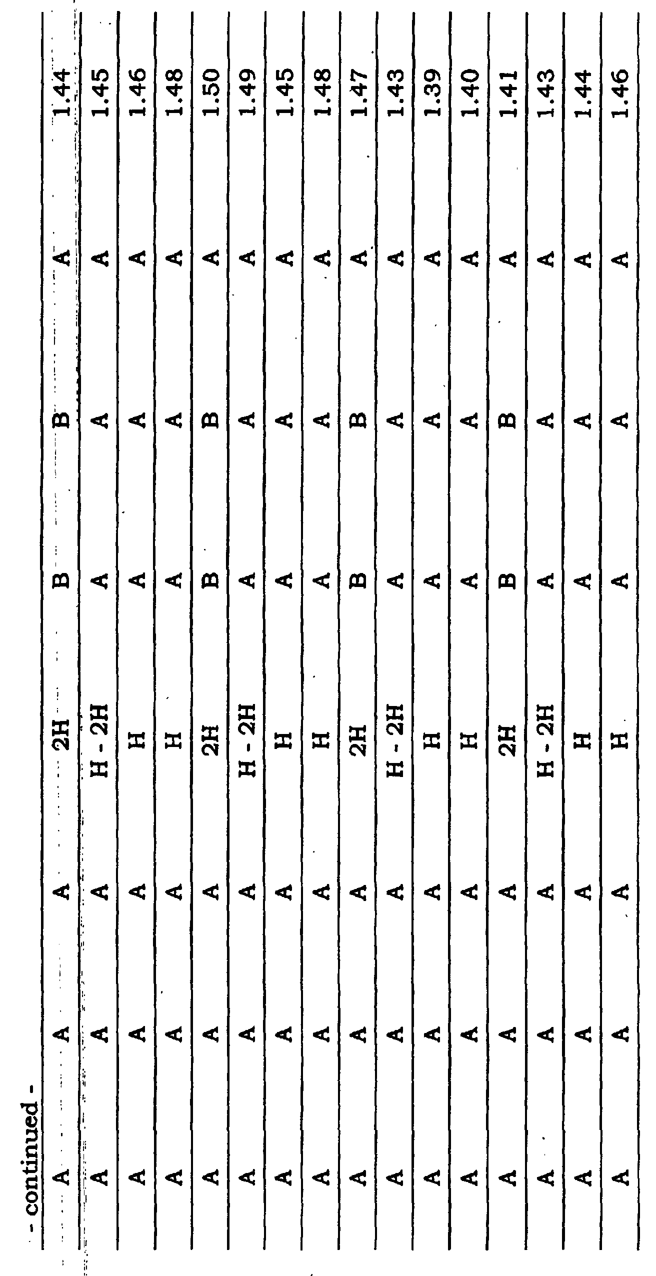

From Tables 1 and 2, it can be seen that the construction materials which are excellent in stain-proofing property (outdoor and indoor), stain removing property, hardness, accelerated weather resistance and post-adhesiveness can be obtained by coating the thermoplastic resin composition of the present invention.

### EXAMPLES 51 to 66

As the vinylidene fluoride polymer C, ZEFFLE SE-310 (aqueous composition of copolymer (C-1) having a monomer ratio of VDF/TFE/CTFE/methyl methacrylate = 52.5/9.8/7.7/30 (mole ratio), solid content of resin: 50 % by weight) or ZEFFLE SE-430 (aqueous composition of copolymer (C-2) having a monomer ratio of VDF/TFE/CTE/methyl methacrylate = 45/8.4/6.6/40 (mole ratio), solid content of resin: 50 % by weight) available from DAIKIN INDUSTRIES, LTD. was used.

To the vinylidene fluoride copolymer having a mixing ratio shown in Table 3 were mixed 10 parts by weight of a film forming aid (butylcarbitol acetate), 0.7 part by weight of thickener (ADECANOL UH-420 available from Asahi Denka Kogyo Kabushiki Kaisha), 2 parts by weight of ultraviolet ray absorber (Tinuvin 1130 available from Ciba Geigy Co., Ltd.), 5 parts by weight of water and a hydrophilic compound in an amount shown in Table 3 to give the resin compositions 51 to 66 of the present invention.

Construction materials and samples were produced by using the obtained resin compositions in the same manner as in Example 1, and the same evaluation as in Example 1 was carried out. The results are shown in Table 3.

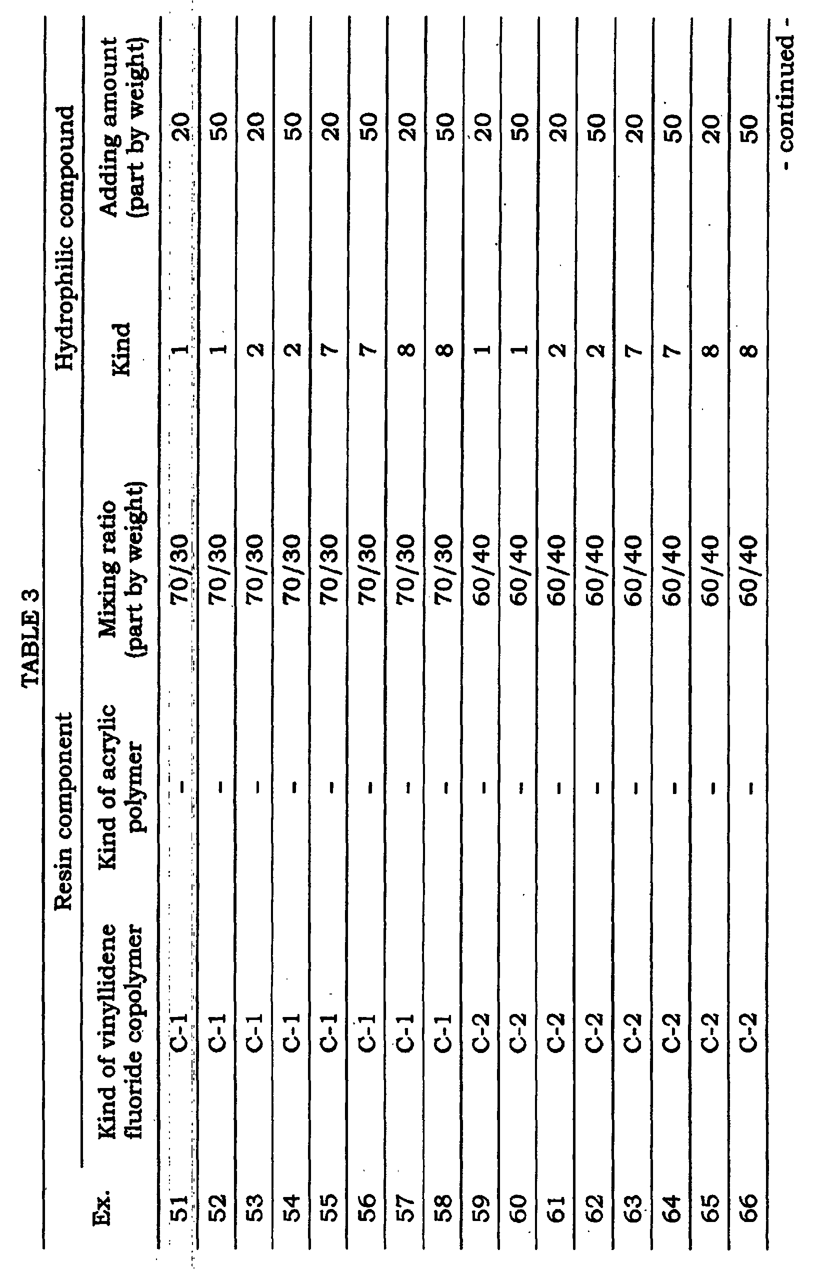

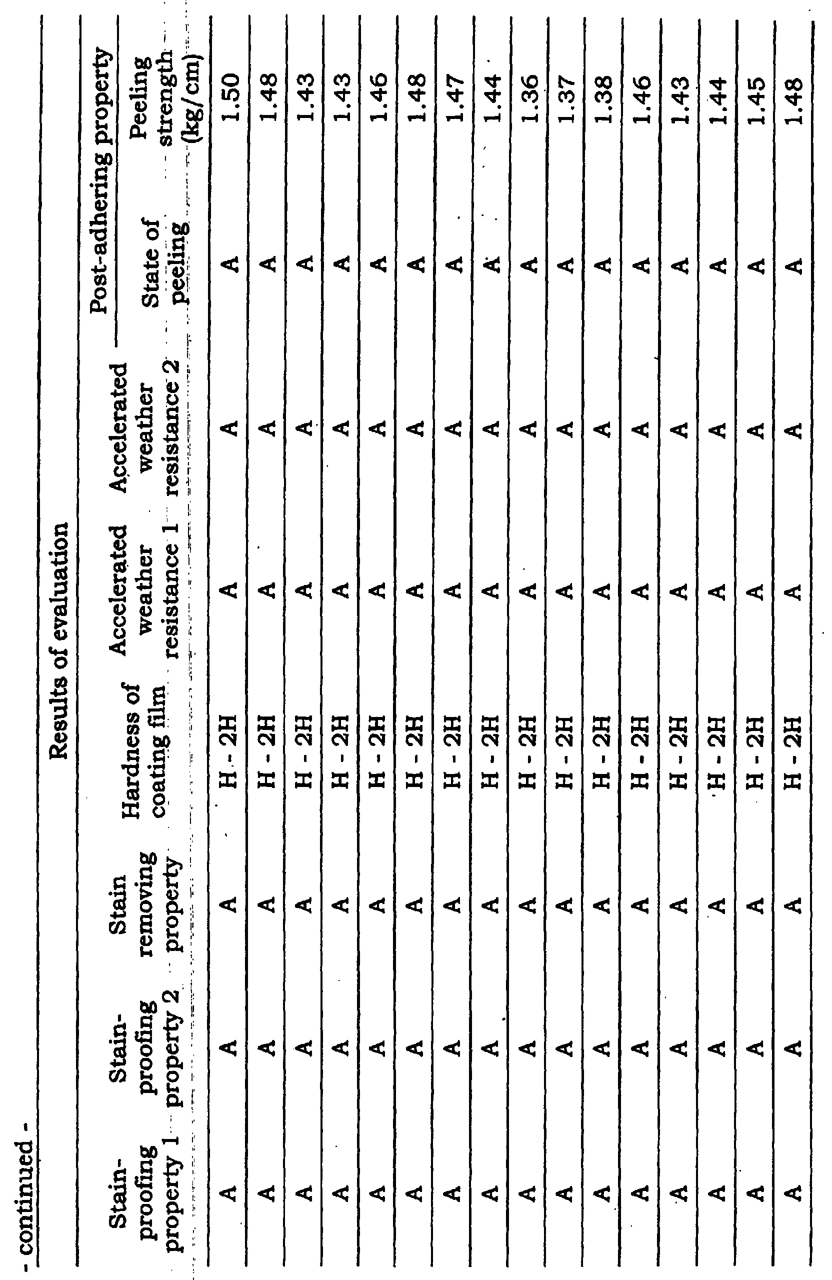

It can be seen from Table 3 that even with the use of a thermoplastic resin composition dispersable in water, stain-proofing property, stain removing property, accelerated weather resistance and post-adhesiveness are good like the composition dispersable in a solvent.

### COMPARATIVE EXAMPLES 1 to 10

To the above-mentioned vinylidene fluoride polymer A or B was added acrylic polymer in a proportion shown in Table 4, and the mixture was dissolved in a solvent mixture of ethyl acetate/toluene in the same manner as in Example 1 to give a resin mixture. Then an ultraviolet ray absorber was added to the resin mixture to give a resin composition. A hydrophilic compound was not added.

Construction materials and samples were produced by using the obtained resin compositions in the same manner as in Example 1, and the same evaluation as in Example 1 was carried out. The results are shown in Table 4.

### COMPARATIVE EXAMPLES 11 to 12

Resin compositions were prepared in a proportion shown in Table 4 by blending a film forming aid, thickener and ultraviolet ray absorber in the same manner as in Examples 51 to 66 without adding a hydrophilic compound.

Construction materials and samples were produced by using the obtained resin compositions in the same manner as in Example 1, and the same evaluation as in Example 1 was carried out. The results are shown in Table 4.

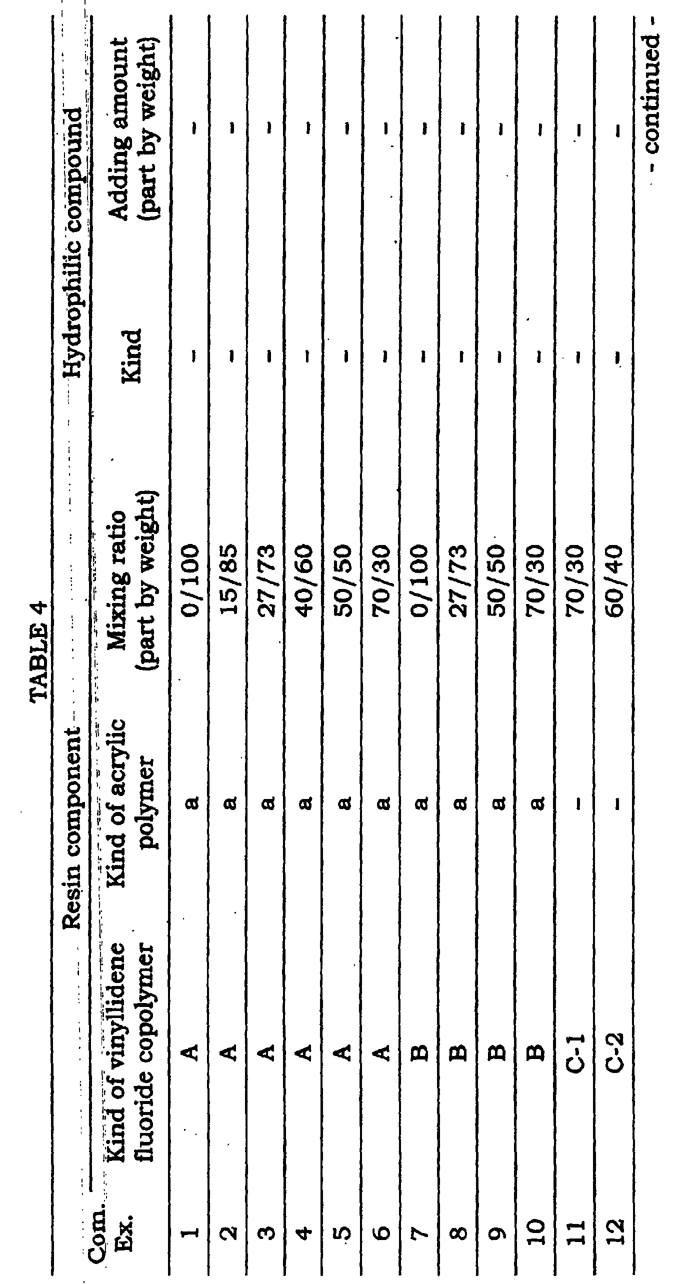

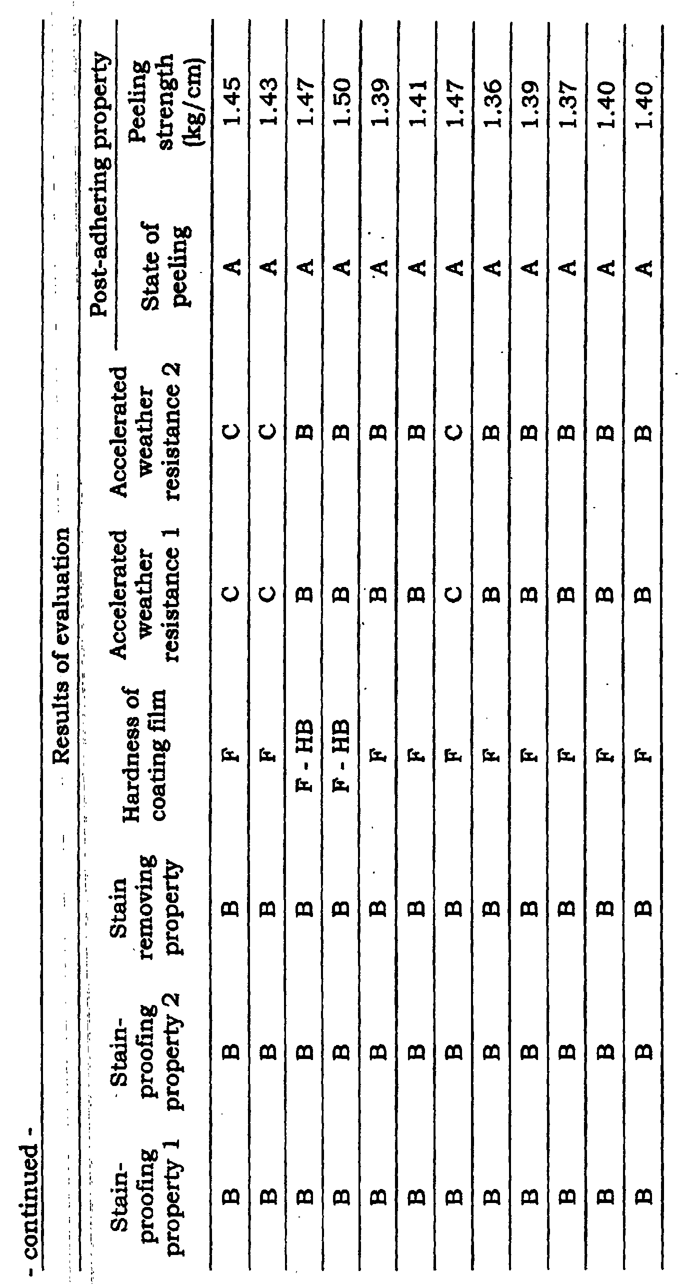

It can be seen from Table 4 that when a hydrophilic compound is not used, stain-proofing property and stain removing property are lowered on the whole as compared with the above-mentioned examples.

### COMPARATIVE EXAMPLE 13

An isophorone dispersion of resin mixture comprising NEOFLON VDF VP-850 (vinylidene fluoride homopolymer) available from DAIKIN INDUSTRIES, LTD. and acrylic resin B-44 available from Rhom & Haas Co., Ltd. in a solid content ratio (weight) of 7/3 was prepared previously, and then applied to a Pyrex glass plate. The plate was then subjected to baking at 230°C for five minutes to give a cast film. The film was peeled and made to adhere to a soft vinyl chloride plate (available from Nippon Test Panel Kogyo Kabushiki Kaisha) with a polyester adhesive to give a sample. The sample was tested and evaluated in the same manner as in Example 1. The results are shown in Table 5.

### COMPARATIVE EXAMPLES 14 to 15

NEOFLON FEP (tetrafluoroethylene/hexfluoropropylene copolymer, coating thickness: 12 µm) or NEOFLON ETFE (ethylene/tetrafluoroethylene copolymer, coating thickness: 12 µm) which is a fluorine-containing copolymer film available from DAIKIN INDUSTRIES, LTD., was made to adhere to a soft vinyl chloride plate with a polyester adhesive in the same manner as in Comparative Example 13 to give a sample. The same evaluation as in Example 1 was carried out with the sample. The results are shown in Table 5

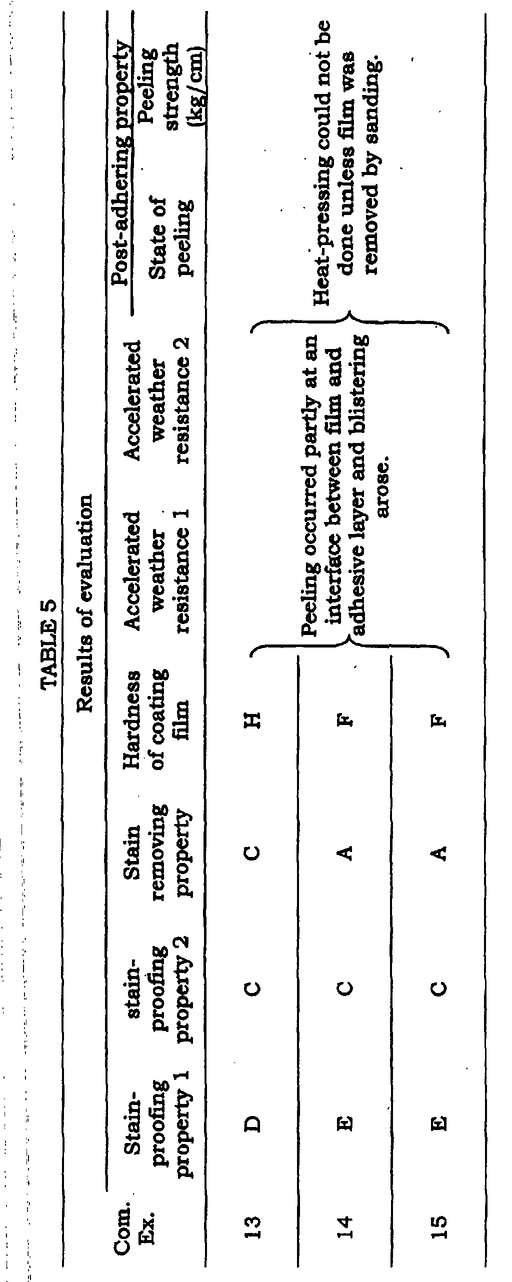

It can be seen from Table 5 that in case of a sample laminated with a fluorine-containing copolymer film, stain-proofing property is poor significantly, accelerated weather resistance is lowered due to deterioration of an adhesive layer and post-adhering to other article cannot be done unless the fluorine-containing copolymer layer is subjected to sanding.

### COMPARATIVE EXAMPLES 16 to 17

LUMIFLON LF-200C (polychlorotrifluoroethylene/alkylvinyl ether copolymer) which is a two component fluorine-containing resin available from Asahi Glass Co., Ltd. and CORONATE HX (curing agent: terpolymer of hexamethylene diisocyanate) available from Nippon Polyurethane Industry Co., Ltd. were blended so that NCO/OH ratio became 1. The mixture was diluted with xylene and then an ultraviolet ray absorbing agent (SUMISORB 130) was added thereto in the same amount as in Example 1 to give a resin composition. In Comparative Example 16, a hydrophilic compound was not added, and in Comparative Example 17, Hydrophilic Compound 1 was added as shown in Table 6. Construction materials and samples were produced by using the obtained resin compositions in the same manner as in Example 1, and the same evaluation as in Example 1 was carried out. The results are shown in Table 6.

### COMPARATIVE EXAMPLES 18 to 19

FLUOROTOP UM-1 (a mixture of polychlorotrifluoroethylene/alkylvinyl ether copolymer and hydroxyl-containing curing type acrylic resin) which is a two component fluorine-containing resin coating available from Asahi Glass Co., Ltd. and CORONATE HX (curing agent) available from Nippon Polyurethane Industry Co. Ltd. were blended so that NCO/OH ratio became 1. The mixture was diluted with xylene to give a resin composition. In Comparative Example 18, a hydrophilic compound was not added, and in Comparative Example 19, a specific amount of Hydrophilic Compound 1 was added as shown in Table 6.

Construction materials and samples were produced by using the obtained resin compositions in the same manner as in Example 1, and the same evaluation as in Example 1 was carried out. The results are shown in Table 6.

### COMPARATIVE EXAMPLES 20 to 21

DIANAL LR-257 (hydroxyl-containing curing type acrylic resin) which is a two component acrylic resin available from Mitsubishi Rayon Co., Ltd. and CORONATE HX (curing agent) available from Nippon Polyurethane Industry Co., Ltd. were blended so that NCO/OH ratio became 1. The mixture was diluted with ethyl acetate/toluene, and then an ultraviolet ray absorbing agent (SUMISORB 130) was added thereto in the same amount as in Example 1 to give a resin composition. In Comparative Example 20, a hydrophilic compound was not added, and in Comparative Example 21, a specific amount of Hydrophilic Compound 1 was added as shown in Table 6.

Construction materials and samples were produced by using the obtained resin compositions in the same manner as in Example 1, and the same evaluation as in Example 1 was carried out. The results are shown in Table 6.

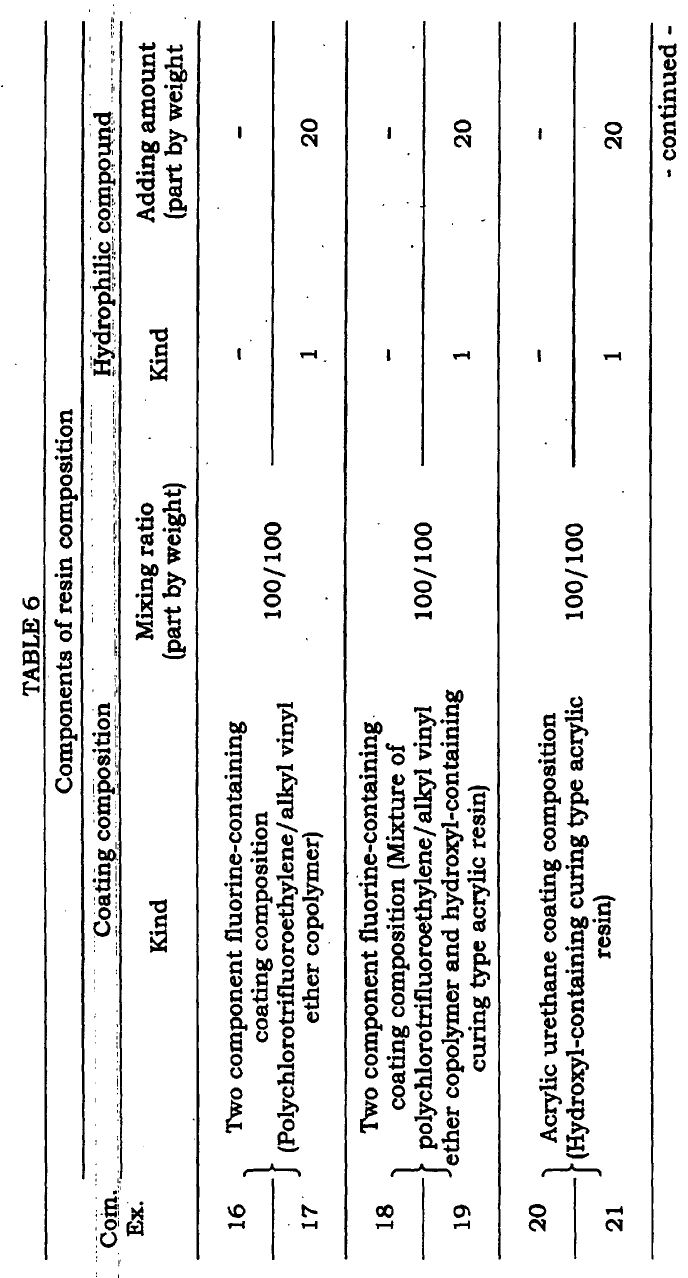

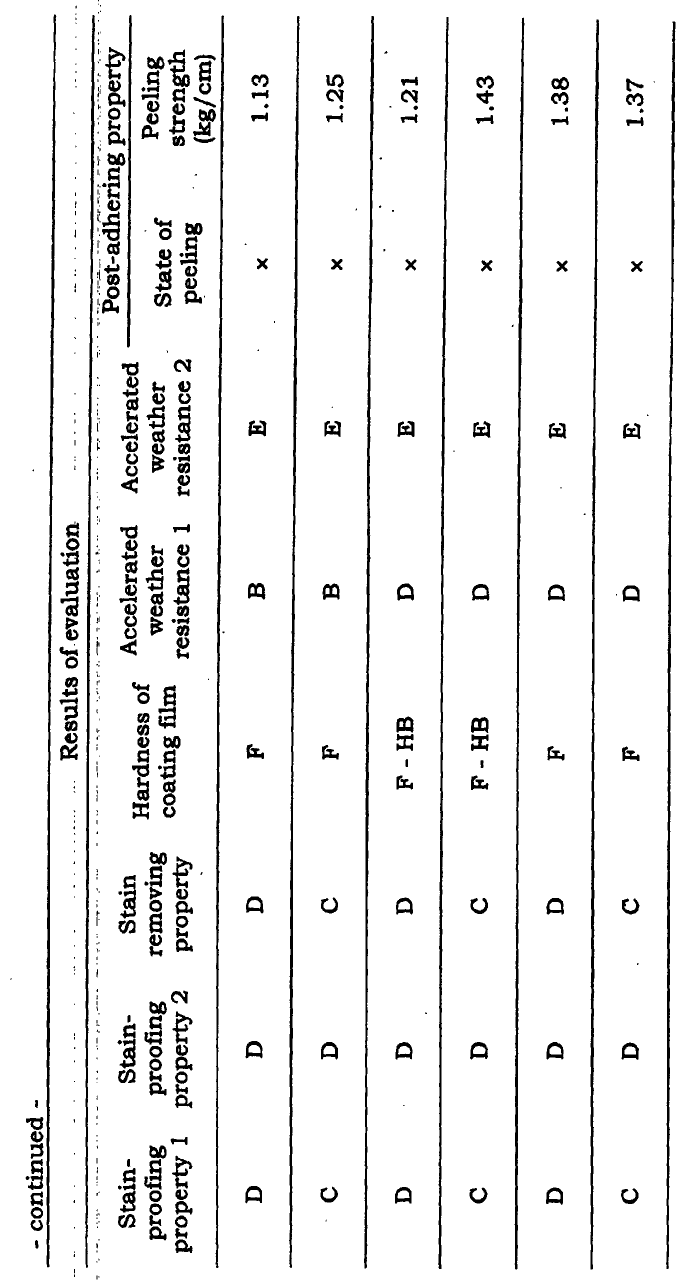

It can be seen from Table 6 that in cases of a curing type fluorine-containing resin and curing type acrylic resin, stain-proofing property, stain removing property, hardness and accelerated weather resistance are lowered, a peel strength at post-adhering is low, a peeled state is not good and post-processability is poor.

### INDUSTRIAL APPLICABILITY

According to the present invention, construction materials for interior and exterior building materials which have good stain-proofing property and are excellent in adhesion, weather resistance and stain removing property can be provided.

## Claims

1. A construction material for interior and exterior use which is produced by applying a resin composition comprising a thermoplastic resin and hydrophilic compound to a substrate.

2. The construction material of Claim 1, wherein the thermoplastic resin is an acrylic polymer or a mixture of an acrylic polymer and a vinylidene fluoride polymer.

3. The construction material of Claim 1, wherein the hydrophilic compound is a hydrophilic colloid compound.

4. The construction material of Claim 2, wherein the acrylic polymer has a weight average molecular weight of from 10,000 to 500,000 and a glass transition temperature of not less than 40°C and the vinylidene fluoride polymer is at least one copolymer selected from the group consisting of vinylidene fluoride/tetrafluoroethylene copolymer, vinylidene fluoride/tetrafluoroethylene/hexafluoropropylene copolymer and vinylidene fluoride/tetrafluoroethylene/chlorotrifluoroethylene copolymer and contains a vinylidene fluoride unit in an amount of 60 to 85 % by mole.

5. The construction material of any of Claims 1 to 4, wherein the substrate is a soft polyvinyl chloride sheet, soft polyvinyl chloride mesh sheet, hard polyvinyl chloride sheet, steel sheet laminated with polyvinyl chloride, wall paper, marking film, woven fabric, non-woven fabric, polycarbonate sheet, ABS resin sheet or a composite substrate thereof.
